(19) Europäisches Patentamt
European Patent Office
Office européen des brevets

(11) **EP 4 203 398 A1**

(12) **EUROPEAN PATENT APPLICATION**
published in accordance with Art. 153(4) EPC

(43) Date of publication:
**28.06.2023 Bulletin 2023/26**

(21) Application number: **21899759.1**

(22) Date of filing: **21.10.2021**

(51) International Patent Classification (IPC):
*H04L 12/42* (2006.01)   *G06N 20/00* (2019.01)
*G06N 3/08* (2023.01)   *G06K 9/62* (2022.01)

(52) Cooperative Patent Classification (CPC):
**G06N 3/098**

(86) International application number:
**PCT/CN2021/125214**

(87) International publication number:
**WO 2022/116725 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.12.2020 CN 202011385627**

(71) Applicant: **Tencent Technology (Shenzhen)
Company Limited
Shenzhen, Guangdong 518057 (CN)**

(72) Inventors:
• **CHENG, Yong
Shenzhen, Guangdong 518057 (CN)**
• **TAO, Yangyu
Shenzhen, Guangdong 518057 (CN)**

(74) Representative: **Gunzelmann, Rainer
Wuesthoff & Wuesthoff
Patentanwälte PartG mbB
Schweigerstraße 2
81541 München (DE)**

(54) **DATA PROCESSING METHOD, APPARATUS, DEVICE, AND STORAGE MEDIUM**

(57)    Provided are a data processing method, apparatus, device, and storage medium, executed by a first device in a data processing system, said method comprising: obtaining first sample data of a target operation (401); on the basis of the first sample data, training a first service processing model to obtain a first model parameter of the first service processing model (402); sending the first model parameter to a second device connected to the first device, the second device determining a first fusion parameter, sending the first fusion parameter to another second device, the first fusion parameter being obtained by the second device on the basis of the received first model parameter and a second model parameter determined on its own, the second device being a device other than the first device in the data processing system ( 403 ); obtaining a second fusion parameter, the second fusion parameter comprising model parameters determined by at least three devices in the data processing system ( 404 ); according to the second fusion parameter, determining a target model parameter for the first service processing model ( 405).

FIG. 4

## Description

RELATED APPLICATION

This application claims priority to Chinese Patent Application No. 202011385627.5, entitled "DATA PROCESSING METHOD, APPARATUS, AND DEVICE, AND STORAGE MEDIUM", and filed on December 02, 2020, which is incorporated herein by reference in its entirety.

FIELD OF THE TECHNOLOGY

This application relates to the field of artificial intelligence technologies, and in particular, to a data processing method, apparatus, and device, and a storage medium.

BACKGROUND OF THE DISCLOSURE

With development of computer technologies and progress of artificial intelligence (AI) technologies, federated learning has gradually become a hot topic in the AI field. The federated learning can complete a training task for a machine learning model through multi-party collaboration.
Currently, a client-server architecture is used in multi-party collaborative federated learning. A federated learning system includes a central federated server, and other client devices (referred to as participants herein) in the federated learning system are all connected to the central federated server for communication, forming a star topology.

SUMMARY

Embodiments of this application provide a data processing method, apparatus, and device, and a storage medium, and the technical solutions are as follows:
According to an aspect, a data processing method is provided, performed by a first device in a data processing system, the data processing system including at least three devices, the devices in the data processing system being connected in a ring architecture, and the method including:

obtaining first sample data of a target service;

training a first service processing model based on the first sample data to obtain a first model parameter of the first service processing model;

transmitting the first model parameter to a second device connected to the first device to enable the second device to determine a first fusion parameter and transmit the first fusion parameter to another second device, the first fusion parameter being obtained by the second device based on the received first model parameter and a second model parameter determined by the second device, and the second device being a device other than the first device in the data processing system;

obtaining a second fusion parameter, the second fusion parameter including model parameters determined by the at least three devices in the data processing system; and

determining a target model parameter of the first service processing model according to the second fusion parameter.

According to an aspect, a data processing method is provided, performed by a second device in a data processing system, the data processing system including at least three devices, the devices in the data processing system being connected in a ring architecture, and the method including:

obtaining second sample data of a target service;

training a second service processing model based on the second sample data to obtain a second model parameter of the second service processing model;

receiving a first model parameter determined by a first device, the at least three devices including the first device;

performing fusion on the first model parameter and the second model parameter determined by the second device to obtain a first fusion parameter;

transmitting the first fusion parameter to another device in the data processing system; and

determining a target model parameter of the second service processing model.

According to an aspect, a data processing system is provided, the data processing system including at least three devices, the at least three devices including a first device and at least two second devices, the first device being any device in the data processing system, and the devices in the data processing system being connected in a ring architecture;

the first device being configured to: obtain first sample data of a target service; train a first service processing model based on the first sample data to obtain a first model parameter of the first service processing model; transmit the first model parameter to a second device connected to the first device to enable the second device to determine a first fusion parameter and transmit the first fusion parameter to another second device, the first fusion parameter being obtained by the second device based on the received first model parameter and a second model parameter determined by the second device, and the second device being a device other than the first device in the data processing system; obtain a second fusion parameter, the second fusion parameter including model parameters determined by the at least three devices in the data processing system; and determine a target model parameter of the first service processing model according to the second fusion parameter; and

any second device being configured to: obtain second sample data of the target service; train a second service processing model based on the second sample data to obtain a second model parameter of the second service processing model; receive a first model parameter determined by a first device; performing fusion on the first model parameter and the second model parameter determined by the second device to obtain a first fusion parameter; transmit the first fusion parameter to another device in the data processing system; and determine a target model parameter of the second service processing model.

According to an aspect, a data processing apparatus is provided, the apparatus including:

an obtaining module, configured to obtain first sample data of a target service;

a training module, configured to train a first service processing model based on the first sample data to obtain a first model parameter of the first service processing model;

a transmitting module, configured to transmit the first model parameter to a second device connected to the first device to enable the second device to determine a first fusion parameter and transmit the first fusion parameter to another second device, the first fusion parameter being obtained by the second device based on the received first model parameter and a second model parameter determined by the second device, and the second device being a device other than the first device in a data processing system;

the obtaining module being further configured to obtain a second fusion parameter, the second fusion parameter including model parameters determined by at least three devices in the data processing system; and

a determining module, configured to determine a target model parameter of the first service processing model according to the second fusion parameter.

According to an aspect, a data processing apparatus is provided, the apparatus including:

an obtaining module, configured to obtain second sample data of a target service;

a training module, configured to train a second service processing model based on the second sample data to obtain a second model parameter of the second service processing model;

a receiving module, configured to receive a first model parameter determined by a first device, at least three devices including the first device;

a fusion module, configured to perform fusion on the first model parameter and the second model parameter determined by the data processing apparatus to obtain a first fusion parameter; and

a transmitting module, configured to transmit the first fusion parameter to another device in a data processing system, devices in the data processing system being connected in a ring architecture; and

the receiving module being further configured to determine a target model parameter of the second service processing model.

According to one aspect, an electronic device is provided, including one or more processors and one or more memories, the one or more memories storing at least one computer program, the computer program being loaded and executed by the one or more processors to implement optional implementations of the foregoing data processing method.

According to an aspect, a computer-readable storage medium is provided, storing at least one computer program, the at least one computer program being loaded and executed by a processor to implement optional implementations of the foregoing data processing method.

According to still another aspect, a computer program product or a computer program is provided, including one or more computer program, the one or more computer program being stored in a computer-readable storage medium. One or more processors of an electronic device can read the one or more pieces of computer program from the computer-readable storage medium, and the one or more processors execute the one or more pieces of computer program to enable the electronic device to perform the data processing method according to any one of the foregoing possible implementations.

BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show merely some embodiments of this application, and a person of ordinary skill in the art may still derive other drawings from these accompanying drawings without creative efforts.

FIG. 1 is a schematic diagram of a sample space and a feature space according to an embodiment of this application.

FIG. 2 is a flowchart of a data processing system according to an embodiment of this application.

FIG. 3 is a flowchart of a data processing system according to an embodiment of this application.

FIG. 4 is a flowchart of a data processing method according to an embodiment of this application.

FIG. 5 is a flowchart of a data processing method according to an embodiment of this application.

FIG. 6 is a schematic diagram of a data processing system according to an embodiment of this application.

FIG. 7 is a flowchart of a data processing method according to an embodiment of this application.

FIG. 8 is a flowchart of a data processing method according to an embodiment of this application.

FIG. 9 is a flowchart of a data processing method according to an embodiment of this application.

FIG. 10 is a schematic structural diagram of a distributed system 100 applied to a blockchain system according to an embodiment of this application.

FIG. 11 is a schematic diagram of a block structure according to an embodiment of this application.

FIG. 12 is a schematic structural diagram of a data processing apparatus according to an embodiment of this application.

FIG. 13 is a schematic structural diagram of a data processing apparatus according to an embodiment of this application.

FIG. 14 is a schematic structural diagram of an electronic device according to an embodiment of this application.

FIG. 15 is a structural block diagram of a terminal according to an embodiment of this application.

FIG. 16 is a schematic structural diagram of a server according to an embodiment of this application.

DESCRIPTION OF EMBODIMENTS

To make the objectives, technical solutions, and advantages of this application clearer, the following further describes the implementations of this application in detail with reference to the accompanying drawings.

The terms "first", "second", and the like in this application are used for distinguishing between same items or similar items of which effects and functions are basically the same. The "first", "second", and "nth" do not have a dependency relationship in logic or time sequence, and a quantity and an execution order thereof are not limited. It is to be understood that, although terms such as "first" and "second" are used to describe various elements in the following description, these elements are not to be limited to these terms. These terms are merely used for distinguishing one element from another element. For example, the first device, the second device, the third device, and the like are only used to distinguish the devices. For another example, the first sample data, the second sample data, and the third sample data are only used to distinguish the sample data. A first device may be referred to as a second device, and similarly, a second device may be referred to as a first device without departing from the scope of the various examples. Both the first device and the second device may be devices, and in some cases, may be separate and different devices.

In this application, "at least one" means one or more, and "a plurality of" means two or more. For example, "a plurality of devices" means two or more devices. "At least two" means two or more. "At least three" means three or more.

It is to be understood that, terms used in description of the various examples in this specification are merely for describing specific examples and are not intended to impose limitations. As used in the description of the various examples and the appended claims, singular forms, "a" or "an" and "the", are intended to also include plural forms, unless the context clearly indicates otherwise.

It is to be further understood that as used herein, the term "and/or" refers to and includes any and all possible combinations of one or more of the associated listed items. And/or describes an association relationship for describing associated objects and represents that three relationships may exist. For example, A and/or B may represent the following three cases: only A exists, both A and B exist, and only B exists. In addition, the character "/" in this application generally indicates an "or" relationship between the associated objects.

It is to be further understood that, sequence numbers of the processes do not mean execution sequences in various embodiments of this application. The execution sequences of the processes should be determined based on functions and internal logic of the processes, and should not constitute any limitation on implementation processes of the embodiments of this application.

Determining B according to A does not mean that B is determined only according to A, but B may be alternatively determined according to A and/or other information.

When used in this specification, the term "include" (also referred to as "includes", "including", "comprises", and/or "comprising") indicates presence of stated features, integers, steps, operations, elements, and/or components, but does not exclude presence or addition of one or more other features, integers, steps, operations, elements, components, and/or groups thereof.

The term "if" may be interpreted as "when" ("when" or "upon"), "in response to determining", or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

An artificial intelligence technology is used in a data processing method provided in the embodiments of this application. Artificial intelligence is briefly described below.

Artificial intelligence (AI) is a theory, method, technology, and application system that uses a digital computer or a machine controlled by the digital computer to simulate, extend, and expand human intelligence, perceive an environment, obtain knowledge, and use knowledge to obtain an optimal result.

Federated learning has gradually become an emerging basic artificial intelligence technology. A design objective of the federated learning is to carry out efficient machine learning between a plurality of participants or a plurality of computing nodes while ensuring information security during big data exchange, protecting privacy of terminal data and personal data, and ensuring legal compliance. Optionally, machine learning algorithms available for the federated learning are not limited to a neural network, but further include important algorithms such as random forest. The federated learning is expected to become a basis for a next-generation artificial intelligence collaborative algorithm and collaborative network.

Considering user privacy protection, data use compliance, commercial interest competition, and the like, data cooperation faces many difficulties, making ideal big data a "data silo", and hindering creation of data value and development of artificial intelligence. To break the data cooperation dilemma, federated learning emerges correspondingly. The federated learning is explained and described below.

The federated learning, also referred to as collaborative learning, can make data "available but invisible" while protecting user privacy and data security, that is, can complete a training task for a machine learning model through multi-party collaboration; and can further provide a machine learning model inference service.

In the federated learning, a plurality of data sources from a plurality of participants may be used to train a machine learning model, to improve performance of the machine learning model by using the plurality of complementary data sources, for example, to improve accuracy of an advertisement recommendation model.

Different from a conventional machine learning method, the federated learning can use a plurality of scattered data sources to jointly train a machine learning model and a deep learning model without centralizing scattered data to one data center. The federated learning can not only meet requirements of data protection laws and regulations, but also implement cross-department, cross-organization, and even cross-industry data cooperation. The federated learning provides new solutions for breaking "data silos", and begins to shift from theoretical research to large-scale commercial application and practice.

According to a status of data distribution among different participants, the federated learning is classified into horizontal federated learning (HFL), vertical federated learning (VFL), and federated transfer learning (FTL).

The horizontal federated learning is also referred to as sample-based federated learning, and is applicable to a case that datasets share a same feature space but have different sample spaces. The vertical federated learning is also referred to as feature-based federated learning, and is applicable to a case that datasets share a same sample space but have different feature spaces. The federated transfer learning is applicable to a case that datasets have both different sample spaces and different feature spaces.

The data processing method provided in the embodiments of this application is a horizontal federated learning method, and the horizontal federated learning is described in detail below.

For example, two participants perform horizontal federated learning. The two participants are referred to as a participant A and a participant B, and the two participants jointly train one or more machine learning models. The participant A and the participant B share a same feature space but have different sample spaces. That is, when performing feature extraction on different sample data, the two participants can represent features in a same feature representation manner. For example, the participant A obtains sample data A, and the participant B obtains sample data B. Both the participant A and the participant B can obtain feature vectors in a form of (X1, X2, X3) by performing feature extraction on the sample data. Dimensions of the feature vectors and a meaning of each dimension are the same. In this way, massive sample data can be distributed to a plurality of participants for training, and finally, training statuses of the plurality of participants can be synthesized to obtain model parameters resulting from training based on the massive sample data.

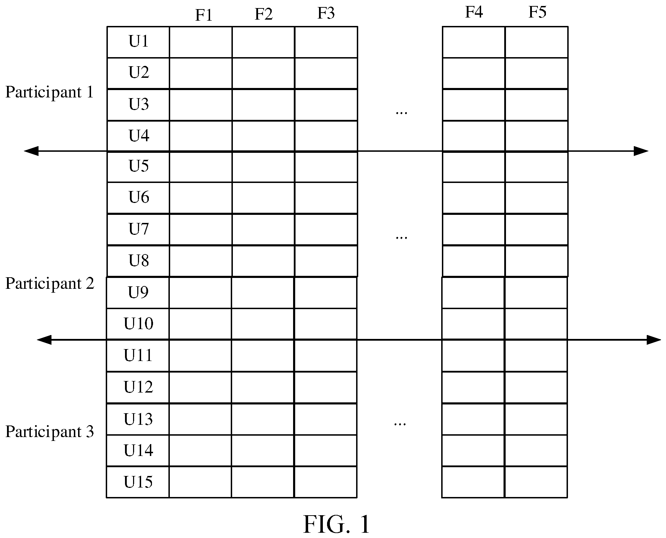

As shown in FIG. 1, in a scenario in which the horizontal federated learning may be applied, datasets owned by participants of the federated learning have a same feature space and different sample spaces. For example, the scenario includes three participants, a participant 1 owns samples U1 to U4, a participant 2 owns samples U5 to U10, and a participant 3 owns samples U11 to U15. Each sample has a same feature space [F1, F2, ..., FL], L being an integer greater than 3. Certainly, this is only an example, and a quantity of features in the feature space is not limited in this embodiment of this application.

A core idea of the horizontal federated learning is to enable each participant train a model locally by using sample data owned by the participant, and then obtain a better global model through security model fusion (for example, security model parameter averaging). With a securely designed model training process of the horizontal federated learning, it can be ensured that none of participants of the horizontal federated learning can obtain training data of other participants, and performance of a model obtained through federation learning is similar to performance of a model trained by centralizing all data.

In the related art, when a federated learning system performs data processing, usually, each participant trains a service processing model according to sample data to obtain a model parameter, and then transmits the model parameter to a central federated server, and the central federated server performs fusion on the model parameter determined by each participant.

This client-server architecture (namely, a star topology) is prone to single-point communication congestion. For example, when all the participants transmit their model parameters to the central federated server, the central federated server is prone to overload and communication congestion, and therefore cannot receive the model parameters transmitted by the participants, causing system breakdown. This phenomenon is more serious especially when the service processing model is large in size. In addition, in the star topology, there is only one communication link between one participant and the central federated server. The participant is likely to be disconnected and temporarily leave the federated learning system due to temporary interruption of the communication link, interrupting a federated learning process. Therefore, the foregoing data processing method as poor stability and robustness.

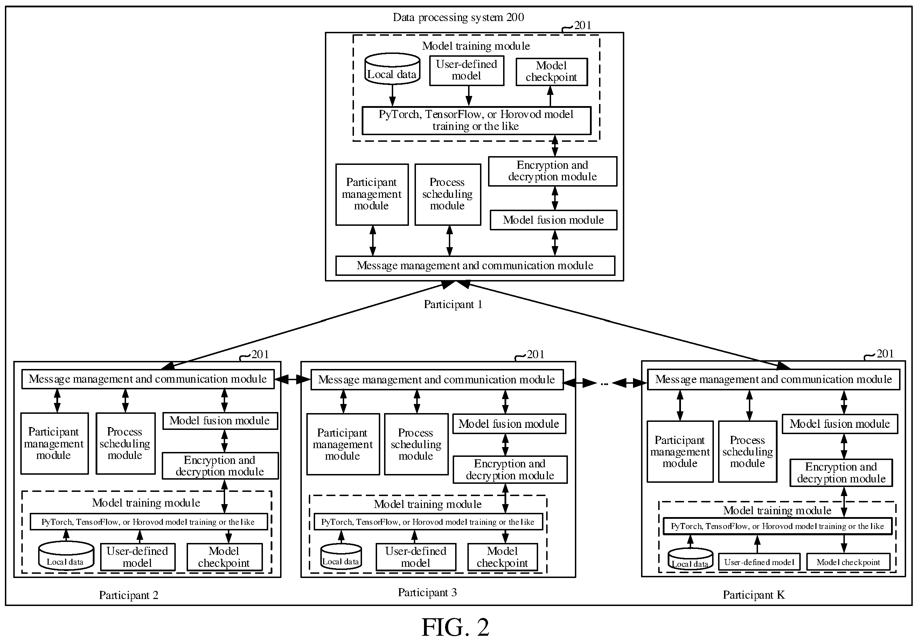

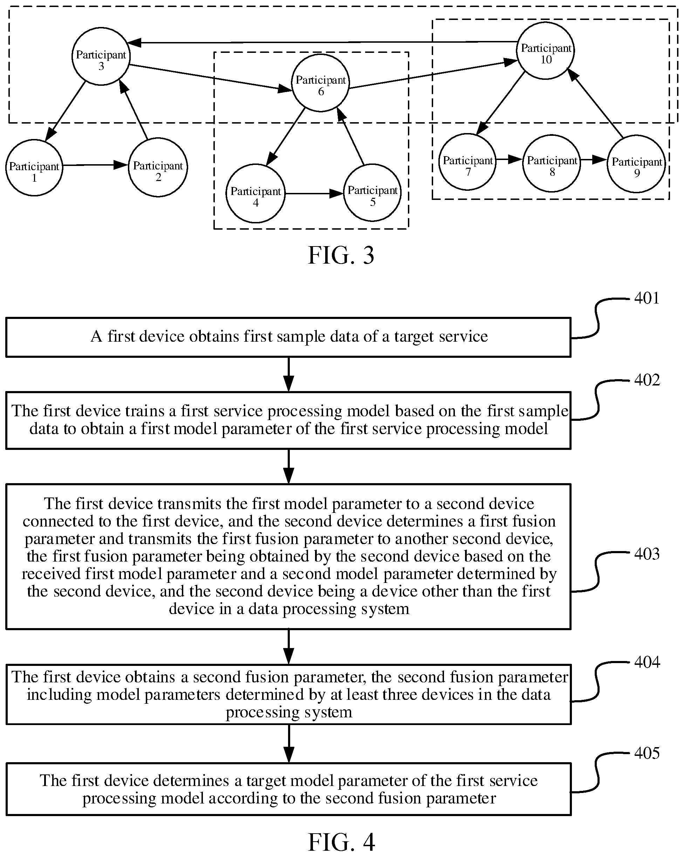

FIG. 2 and FIG. 3 are schematic diagrams of an implementation environment of a data processing system according to an embodiment of this application. The data processing method provided in the embodiments of this application is applied to the data processing system 200, which may also be referred to as a federated learning system 200. A system architecture of the data processing system 200 is described below.

The data processing system includes at least three devices, the at least three devices include a first device and at least two second devices, and the first device is any device in the data processing system. The devices in the data processing system are connected in a ring architecture. In the ring architecture, the devices are connected in series to finally form a closed loop, and information transmitted on an entire network is transmitted in the loop. A device in the data processing system may be connected to two other devices to form one or more rings.

The devices in the data processing system all participate in a federated learning process. Therefore, each device may be referred to as a participant. Participants may be directly or indirectly connected in a wired or wireless communication manner. This is not limited in this embodiment of this application.

For each device, the device may include at least one of one computing device, a plurality of computing devices, a cloud computing platform, or a virtualization center. Optionally, a device undertakes primary computing work in federated learning, and other devices undertake secondary computing work in the federated learning; or the devices perform collaborative computing by using a distributed computing architecture.

As shown in FIG. 2, the data processing system 200 includes at least three devices 201. In FIG. 2, only a participant 1, a participant 2, a participant 3, ..., and a participant K are used as examples for the at least three devices 201, K being an integer greater than 3. A plurality of participants are in a ring architecture. Each participant has two communication links to other participants, and each participant is connected only to a neighbor of the participant to form a ring topology. In the ring topology, each participant of horizontal federated learning only needs to communicate with a direct neighbor of the participant, and there are two communication links between every two participants. In this way, even if one of the communication links is temporarily interrupted, data can be transmitted through the other communication link, thereby achieving a good link failure tolerance function.

As shown in FIG. 3, the data processing system 200 includes at least three devices, and the data processing system includes at least two device groups. That is, the at least three devices can be divided into a plurality of device groups, each device group includes at least three devices, and each device group may be in a ring architecture, so that the data processing system forms a multi-layer ring architecture. Each device group includes a leader and a follower, and devices in each device group are connected in a ring architecture, that is, the devices in each device group can form a ring, and each device is connected to at least two devices in the group. Leaders in the at least two device groups are connected in a ring architecture. The groups may be deployed when there are many devices in the data processing system, to improve parallelism and orderliness of data processing by a plurality of groups of devices, and improve data processing efficiency.

For example, when there are many participants, the participants may be grouped to form a multi-layer ring topology. In FIG. 3, only a participant 1, a participant 2, ..., and a participant 10 are used as examples for description. The participant 1, the participant 2, and the participant 3 are a first device group. The participant 4, the participant 5, and the participant 6 are a second device group. The participant 7, the participant 8, the participant 9, and the participant 10 are a third device group. The participant 3, the participant 6, and the participant 10 are leaders in the three device groups (each group of participants), and the participant 1 and the participant 2 are followers of the participant 3. As shown in FIG. 3, there are 10 horizontal federated learning participants, a first layer includes three rings formed by three groups, and a second layer includes a ring formed by leaders of the three groups. At the first layer, all participants in each ring may perform calculation in parallel, and calculation in all rings may also be performed in parallel. At the second layer, all participants in each ring may perform calculation in parallel. A calculation process in each ring may be the same as a process described in the following steps 1 to 4, especially a weighted averaging process for parameters of a parallel segment calculation model in the following step 3.

The quantities of devices in FIG. 2 and FIG. 3 are only examples, and do not constitute a limitation to a quantity of devices included in the data processing system.

In an example scenario, the federated learning system further includes a third-party collaborator server, the collaborator server is configured to provide a federated learning platform or a federated data analysis platform, and the collaborator server may provide external cloud services such as federated learning, federated data analysis services, and federated business intelligence services in a public cloud or private cloud deployment mode. For example, the collaborator server is equipped with a functional module for federated data analysis tasks, and the functional module implements the data processing method provided in the embodiments of this application to improve security and usability of the federated data analysis tasks.

Optionally, the server may be an independent physical server, or is a server cluster or a distributed system formed by a plurality of physical servers, or is a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform.

Optionally, the devices in the data processing system may be terminals, and device types of the terminals include but are not limited to At least one of a smartphone, a desktop computer, a tablet computer, and a laptop portable computer. The following embodiment is described by using an example in which the terminal includes a smartphone.

A person skilled in the art may learn that there may be more or fewer devices. For example, there may be only one device, or there may be dozens of or hundreds of or more devices. The quantity and the device type of the device are not limited in the embodiments of this application.

As shown in FIG. 2, each device may include a message management and communication module, a participant management module, a process scheduling module, a model fusion module, an encryption and decryption module, and a model training module. A plurality of devices perform data communication through the message management and communication module to transmit model parameters respectively determined by the device. In each device, the model training module can perform model training according to local data and a user-defined model, and can execute a model checkpoint after the model training. The checkpoint is a database event, and the checkpoint event is initiated by a checkpoint process (LGWR/CKPT process). When the checkpoint event occurs, a database writer (DBWR) writes a dirty block to a disk, and file headers of a data file and a control file are also updated to record checkpoint information. The dirty block is a block of dirty reads. A dirty read means that data in a source system is beyond a given range, meaningless to an actual service, or in an invalid data format, and irregular code and ambiguous service logic exist in the source system.

After the device obtains a model parameter through training, the encryption and decryption module encrypts the model parameter, and the model fusion module performs fusion on the model parameter determined by the device and a model parameter determined by another device. The model parameter determined by the another device is transmitted by the message management and communication module. During model parameter fusion, the participant management module may further manage participants, and the process scheduling module may further schedule a model parameter fusion process, for example, determine a device that is to start to initiate a weighted combination process for a specific model parameter and that is responsible for weighted combination of model parameters.

FIG. 4 is a flowchart of a data processing method according to an embodiment of this application. The method is performed by a first device in a data processing system. The data processing system includes at least three devices. The devices in the data processing system are connected in a ring architecture. The first device may be a terminal or a server. Herein, for example, the first device is a terminal. The method includes the following steps.

401: The first device obtains first sample data of a target service.

The data processing method provided in this embodiment of this application is used to train a service processing model based on sample data to obtain a target model parameter of the service processing model. The first sample data is sample data stored on the first device. The data processing method is implemented by the data processing system. The data processing system includes a plurality of devices. The first device belongs to the data processing system. The data processing method is collaboratively performed by the plurality of devices. Therefore, the data processing method is a federated learning method. In some embodiments, the plurality of devices may also be referred to as a plurality of participants.

402: The first device trains a first service processing model based on the first sample data to obtain a first model parameter of the first service processing model.

In this embodiment, the first device obtains the first sample data, and performs model training on the first service processing model locally on the first device to obtain the first model parameter. In some embodiments, the first model parameter is obtained locally on the first device through training, and may also be referred to as a local model parameter of the first device, a local model parameter determined by the first device, or the like.

Similarly, another device (namely, a second device) in the data processing system may also obtain second sample data, and train the model locally to determine a second model parameter. In this way, each device in the data processing system obtains a model parameter through training based on sample data of the device. Fusion may be performed on model parameters determined by the plurality of devices in the data processing system to obtain the target model parameter of the service processing model.

As shown in the data processing system shown in FIG. 2 and FIG. 3, the devices in the data processing system are connected in a ring architecture, and may form one or more rings. A device in the data processing system is connected to at least two devices, a device in each ring is connected to two devices in the ring, and each device may communicate with a neighboring device. In this way, a device has at least two communication links to another device, and even if one of the communication links is temporarily interrupted, the device may also communicate with the another device through the other communication link. Therefore, the data processing system does not interrupt a data processing process due to temporary interruption of a communication link, thereby achieving good stability and robustness.

403: The first device transmits the first model parameter to a second device connected to the first device, and the second device determines a first fusion parameter and transmits the first fusion parameter to another second device, the first fusion parameter being obtained by the second device based on the received first model parameter and a second model parameter determined by the second device, and the second device being a device other than the first device in the data processing system.

After the first device and the second device determine the model parameters, not all the model parameters are transmitted to a same device for fusion. Instead, starting from the first device, the first device transmits the first model parameter to the connected second device. After receiving the first model parameter, the second device performs fusion on the first model parameter and the second model parameter determined by the second device, and further transmits a fusion model parameter to a next second device. In a transmission process, each device performs fusion on a received model parameter and a model parameter determined by the device and then transmits a fusion model parameter, so that an amount of data transmitted between devices is small. This can effectively avoid overload and communication congestion, effectively improve a speed and efficiency of data processing, and ensure stability of data processing.

404: The first device obtains a second fusion parameter, the second fusion parameter including model parameters determined by the at least three devices in the data processing system.

A device connected to the first device in the data processing system performs fusion on a model parameter determined by the device and a received fusion model parameter to obtain a second fusion parameter. The second fusion parameter includes model parameters determined by all devices in the data processing system. Therefore, the second fusion parameter may be transmitted back to the first device, and the first device further determines a target model parameter of the first service processing model. In some embodiments, that the second fusion parameter includes model parameters determined by the at least three devices in the data processing system means that the second fusion parameter is obtained by performing fusion on the model parameters determined by the at least three devices in the data processing system.

405: The first device determines the target model parameter of the first service processing model according to the second fusion parameter.

In this embodiment of this application, on the one hand, the devices in the data processing system are connected in a ring architecture, and each device may communicate with a neighboring device. In this way, a device has two communication links to another device, and even if one of the communication links is temporarily interrupted, the device may also communicate with the another device through the other communication link. Therefore, the data processing system does not interrupt a data processing process due to temporary interruption of a communication link, thereby achieving good stability and robustness. On the other hand, when the data processing system performs data processing, a model parameter determined by each device is sequentially transmitted according to the foregoing communication link. In addition, in a transmission process, each device performs fusion on a received model parameter and a model parameter determined by the device and then transmits a fusion model parameter, so that an amount of data transmitted between devices is small, and model parameters do not need to be transmitted to one device in a centralized manner. This can effectively avoid overload and communication congestion, effectively improve a speed and efficiency of data processing, and ensure stability of data processing.

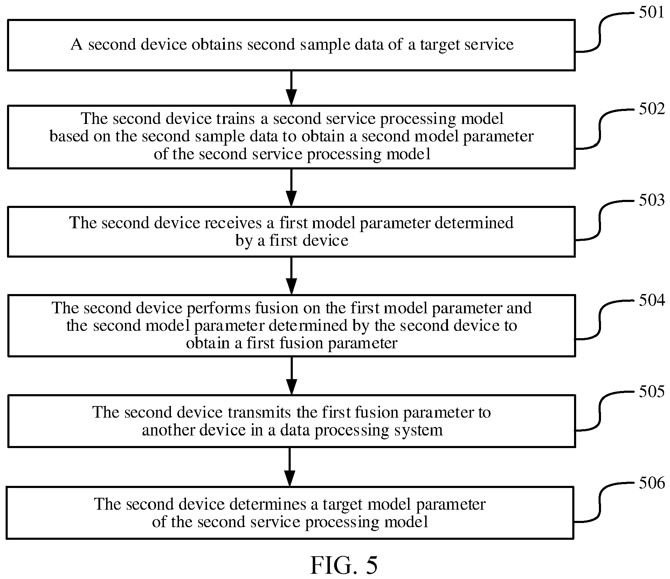

FIG. 5 is a flowchart of a data processing method according to an embodiment of this application. The method is performed by a second device in a data processing system. The data processing system includes at least three devices. The devices in the data processing system are connected in a ring architecture. The second device may be a terminal or a server. Herein, for example, the second device is a terminal. The method includes the following steps.

501: The second device obtains second sample data of a target service.

502: The second device trains a second service processing model based on the second sample data to obtain a second model parameter of the second service processing model.

Step 501 and step 502 are similar to step 401 and step 402. The second device may also obtain the second sample data of the second device and perform model training on the second service processing model to obtain the second model parameter.

503: The second device receives a first model parameter determined by a first device.

The at least three devices include the first device.

Step 503 corresponds to step 403. The second device receives the first model parameter transmitted by the first device in step 403.

504: The second device performs fusion on the first model parameter and the second model parameter determined by the second device to obtain a first fusion parameter.

The second device receives the first model parameter determined by the first device, and also obtains the second model parameter locally through training. Therefore, the second device may perform fusion on the two model parameters and then transmit a fusion model parameter to another device, instead of directly transmitting the two model parameters. This can reduce an amount of data transmitted between the second device and the another device, effectively avoid overload and communication congestion, and effectively improve a speed and efficiency of data processing.

505: The second device transmits the first fusion parameter to another device in the data processing system.

Similarly, when receiving the first fusion parameter transmitted by the second device, the another device may also obtain a new fusion model parameter based on the first fusion parameter and a model parameter determined by the another device, and further transmit the fusion model parameter. After a second fusion parameter including model parameters of all devices in the data processing system is subsequently obtained, the second fusion parameter may be transmitted back to the first device to determine the target model parameter of the first service processing model.

506: The second device determines a target model parameter of the second service processing model.

After the target model parameter is determined by another device (for example, the first device), the target model parameter may be transmitted to any device in the data processing system. In this case, the second device may receive the target model parameter of the second service processing model.

In this embodiment of this application, on the one hand, the devices in the data processing system are connected in a ring architecture, and each device may communicate with a neighboring device. In this way, a device has two communication links to another device, and even if one of the communication links is temporarily interrupted, the device may also communicate with the another device through the other communication link. Therefore, the data processing system does not interrupt a data processing process due to temporary interruption of a communication link, thereby achieving good stability and robustness. On the other hand, when the data processing system performs data processing, a model parameter determined by each device is sequentially transmitted according to the foregoing communication link. In addition, in a transmission process, each device performs fusion on a received model parameter and a model parameter determined by the device and then transmits a fusion model parameter, so that an amount of data transmitted between devices is small, and model parameters do not need to be transmitted to one device in a centralized manner. This can effectively avoid overload and communication congestion, effectively improve a speed and efficiency of data processing, and ensure stability of data processing.

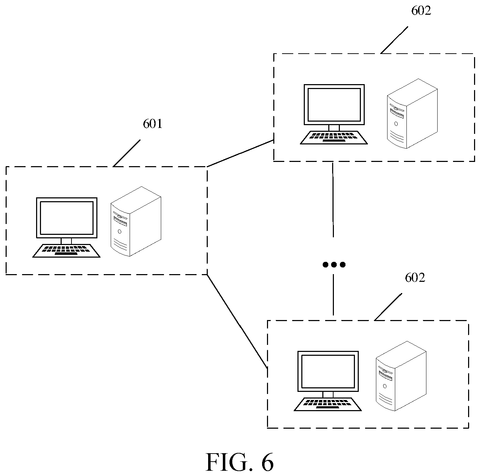

FIG. 6 is a schematic diagram of a data processing system according to an embodiment of this application. As shown in FIG. 6, the data processing system includes at least three devices, the at least three devices include a first device 601 and at least two second devices 602, and the first device is any device in the data processing system. The second device is a device other than the first device in the data processing system. The devices in the data processing system are connected in a ring architecture, and one device is connected to other two devices. The first device is configured to perform the data processing method performed by the first device in the method embodiments. The second device is configured to perform the data processing method performed by the second device in the method embodiments. For details, refer to the method embodiments shown in FIG. 4, FIG. 5, and FIG. 7.

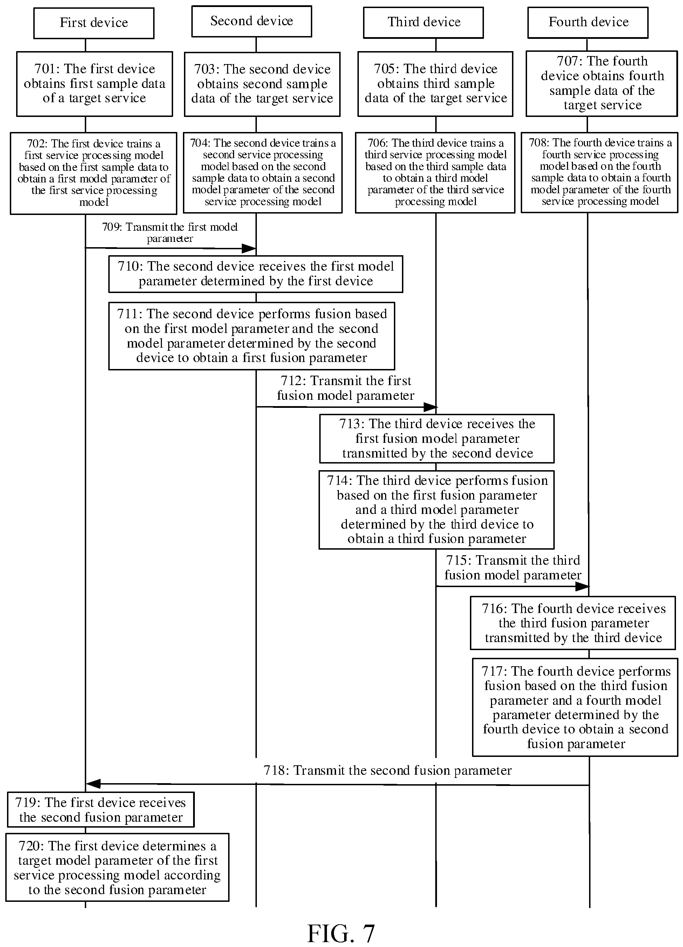

FIG. 7 is a flowchart of a data processing method according to an embodiment of this application. As shown in FIG. 7, the method is applied to a data processing system. The following describes the data processing method in a manner in which a plurality of devices included in the data processing system collaboratively performs data processing. The following embodiment is described by using an example in which the data processing system includes four devices. A device connected to a first device is referred to as a second device, and second devices other than the second device are referred to as a third device and a fourth device. Herein, that the data processing system includes four devices is only used as an example for description. The data processing system may alternatively include more devices or fewer devices, and method steps performed by the devices are similar to those performed by the devices in the following embodiment. As shown in FIG. 7, the method includes the following steps.

701: The first device obtains first sample data of a target service.

In this embodiment of this application, each device in the data processing system can obtain sample data of the target service to train a corresponding service processing model. In horizontal federated learning, each device can obtain sample data of the device, and sample features obtained by processing the sample data are located in one feature space.

The target service may be any service, for example, image classification or speech recognition. Correspondingly, the service processing model may be any model, for example, an image classification model or a speech recognition model. In some embodiments, the service processing model is a deep learning model, and a model structure of the deep learning model is not limited in this embodiment of this application.

For different target services, sample data may also be different. For example, sample data in an image classification service is a sample image, and sample data in a speech recognition service is sample speech.

In some embodiments, the first sample data is stored on the first device, and the first device may extract the first sample data from local storage. In some other embodiments, the first sample data may be stored in a database, and the first device may extract the first sample data from the database. The first sample data is a plurality of pieces of sample data corresponding to the first device, or is referred to as a sample data set corresponding to the first device.

702: The first device trains a first service processing model based on the first sample data to obtain a first model parameter of the first service processing model.

The first service processing model is a service processing model corresponding to the first device, in other words, a service processing model deployed on the first device.

After obtaining the first sample data, the first device can locally train the first service processing model to obtain the first model parameter of the first service processing model. Herein, a model parameter obtained by each device in the data processing system through model training is referred to as a model parameter, to indicate that the model parameter is a result obtained from model training of a device. Finally, model parameters determined by the devices in the data processing system need to be synthesized to obtain a final model parameter. The final model parameter is referred to as a target model parameter in this embodiment of this application.

In some embodiments, the model training process is as follows: The first device performs feature extraction on the first sample data by using the first service processing model to obtain a feature of the first sample data; then further performs processing corresponding to the target service on the feature to obtain a prediction result of the first sample data; and then determines a loss value based on a target result in the first sample data and the prediction result, adjusts a model parameter of the first service processing model based on the loss value, and stops when a training end condition is met, the target result being a tag carried in the first sample data.

The training end condition may be that the loss value converges, a quantity of iterations reaches a target quantity, or the like. This is not limited in this embodiment of this application.

The first device may perform model training on the first service processing model locally for one or more epochs. One epoch is equivalent to training a model once by using all samples in sample data. Generally, a value of the epoch is a quantity of times the entire sample data is used.

The first device may use any training method and training framework, for example, PyTorch, TensorFlow, Keras, Horovod, or PyTorch-on-Angel. The PyTorch is an open-source Python machine learning library. The TensorFlow is a symbolic mathematical system based on dataflow programming, and is widely used in programming implementation of various machine learning algorithms. Tensor indicates a tensor, and Flow indicates a flow. The Keras is an open-source artificial neural network library written in Python. The Horovod is an open-source deep learning tool of Uber. The PyTorch-on-Angel is a PyTorch project running on the Angel platform. Angel is a computing platform developed in Java and Scala languages, and is a high-performance distributed computing framework oriented to machine learning. The first device, the second device, the third device, and the fourth device may select different training methods and training frameworks, that is, each device in the data processing system may select its own training method and training framework. A specific selection manner may be determined by a person skilled in the art according to a requirement or hardware and software conditions of the device. This is not limited in this embodiment of this application.

703: The second device obtains second sample data of the target service.

704: The second device trains a second service processing model based on the second sample data to obtain a second model parameter of the second service processing model.

Step 703 and step 704 are similar to step 701 and step 702. The second device may also perform model training based on the second sample data of the second device to obtain the second model parameter. The second service processing model is a service processing model corresponding to the second device. The second service processing model is a service processing model deployed on the second device. The second service processing model may be a service processing model with a structure the same as that of the first service processing model, or a service processing model with a structure different from that of the first service processing model. This is not limited in this embodiment of this application.

705: The third device obtains third sample data of the target service.

706: The third device trains a third service processing model based on the third sample data to obtain a third model parameter of the third service processing model.

Step 705 and step 706 are similar to step 701 and step 702. The third device may also perform model training based on the third sample data of the third device to obtain the third model parameter. The third service processing model is a service processing model corresponding to the third device. The third service processing model is a service processing model deployed on the third device. The third service processing model may be a service processing model with a structure the same as that of the first service processing model, or a service processing model with a structure different from that of the first service processing model. This is not limited in this embodiment of this application.

707: The fourth device obtains fourth sample data of the target service.

708: The fourth device trains a fourth service processing model based on the fourth sample data to obtain a fourth model parameter of the fourth service processing model.

Step 707 and step 708 are similar to step 701 and step 702. The fourth device may also perform model training based on the fourth sample data of the fourth device to obtain the fourth model parameter. The fourth service processing model is a service processing model corresponding to the fourth device. The fourth service processing model is a service processing model deployed on the fourth device. The fourth service processing model may be a service processing model with a structure the same as that of the first service processing model, or a service processing model with a structure different from that of the first service processing model. This is not limited in this embodiment of this application.

The foregoing step sequence numbers do not limit an execution sequence of steps 701 and 702, steps 703 and 704, steps 705 and 706, and steps 707 and 708. Processes of performing model training based on sample data by the devices in the data processing system are independent of each other and can be performed in parallel. Compared with collecting all sample data by one device for training, model training steps are distributed to devices and performed by the devices in parallel. This can greatly improve a speed and efficiency of model training, and can also reduce load on a device during model training to avoid system breakdown due to device overload.

709: The first device transmits the first model parameter to the second device connected to the first device.

After each device in the data processing system obtains a model parameter through training, fusion needs to be performed on model parameters determined by a plurality of devices. The first device is any device in the data processing system. In this embodiment, an example in which the first device is an initiator of model parameter fusion and a device for processing a fusion model parameter to obtain the target model parameter is used for description. In some embodiments, another device may be alternatively selected as an initiator of model parameter fusion, or another device may be selected as a device for processing a fusion model parameter to obtain the target model parameter. This is not limited in this embodiment of this application.

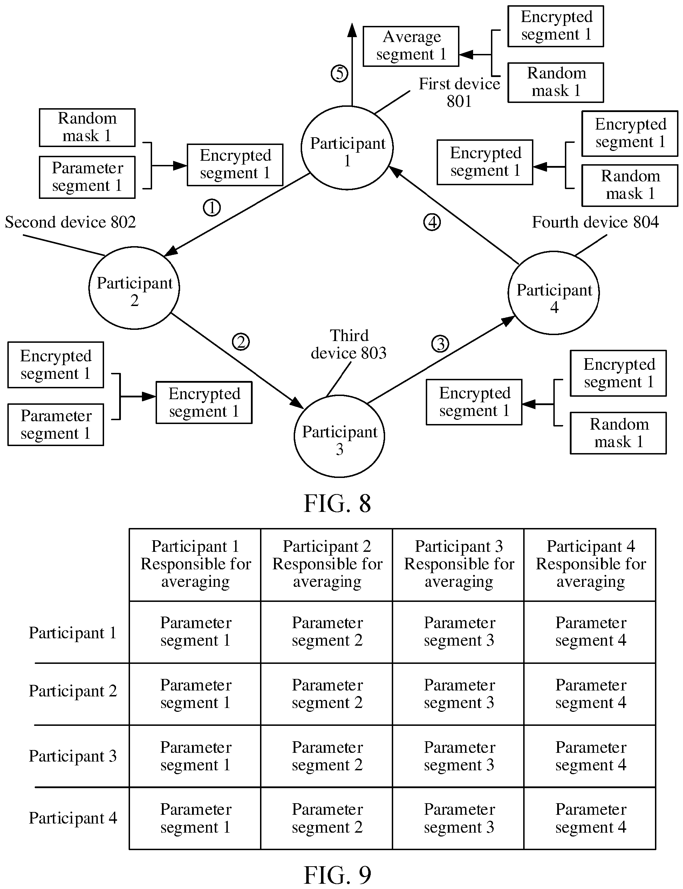

For the four devices provided in this embodiment of this application, a connection manner for the four devices may be shown in FIG. 8. As shown in FIG. 8, the data processing system includes a first device 801, a second device 802, a third device 803, and a fourth device 804. The four devices are in a ring architecture. The first device 801 is separately connected to the second device 802 and the fourth device 804. The second device 802 is separately connected to the third device 803 and the first device 801. The third device 803 is separately connected to the second device 802 and the fourth device 804. The fourth device 804 is separately connected to the third device 803 and the first device 801. The four devices may also be referred to as four participants. For example, the four devices may be referred to as a participant 1, a participant 2, a participant 3, and a participant 4.

After determining the first model parameter, the first device can transmit the first model parameter to another device through a communication connection. In this embodiment, the second device and the fourth device are connected to the first device. Herein, only an example in which the first model parameter is transmitted to the second device is used for description. In some embodiments, the first device may also transmit the first model parameter to the fourth device, and the second device subsequently transmits a second fusion parameter determined by the third device back to the first device.

In some embodiments, when data is transmitted between devices in the data processing system, the data is encrypted before being transmitted. For example, each device may use a secret sharing-based method to protect a model parameter obtained through local training. For example, the secret sharing-based method may be implemented by adding a random mask. In step 709, the first device may obtain a random mask, perform fusion on the random mask and the first model parameter to obtain an encrypted model parameter, and then transmit the encrypted model parameter to the second device connected to the first device. Fusion is performed on the random mask and the first model parameter, and then the encrypted model parameter is transmitted. In this way, even if another device captures the transmitted encrypted model parameter, because the another device does not know the random mask, the another device cannot infer the first model parameter determined by the first device, thereby ensuring security of data transmission between devices.

In addition, in the manner of adding a random mask rather than being based on homomorphic encryption, a case that a quantity of bytes of ciphertext is many times greater (for example, 64 times greater) than a quantity of bytes of plaintext does not occur, that is, no ciphertext expansion problem occurs, and naturally, a large amount of calculation and data transmission is avoided. The foregoing manner of adding a random mask can greatly reduce communication overheads, and further avoid a single-point communication congestion problem and a link failure problem.

In some embodiments, the model parameter determined by each device may be a floating-point number. When secret sharing is adopted, each device may convert the determined model parameter from a floating-point number into an integer, and further perform a modulo operation on the integer obtained through rounding, and transmit a remainder to another device. This can effectively reduce a volume of data transmitted and improve data processing efficiency while improving security of data transmission.

In some embodiments, a process of obtaining the random mask is as follows: The first device obtains a candidate random mask, and then rounds the candidate random mask to obtain the random mask.

Correspondingly, after obtaining the random mask, the first device may further round the first model parameter, and then perform fusion the random mask and a rounded first model parameter. In some embodiments, the first device rounds the first model parameter, performs summation on the random mask and a rounded first model parameter, and performs a modulo operation on a summation result to obtain the encrypted model parameter.

For example, the process of obtaining the random mask may be implemented by $r_1 = INT(P\tilde{r}_1)$. $\tilde{r}_1$ is the candidate random mask, and INT(x) means rounding x. P is a very large integer, and is used for converting the candidate random mask into an integer. Selection of the integer P determines a degree of preservation of floating-point number precision. A larger P indicates a higher degree of preservation of floating-point number precision. A value of P is not limited in this embodiment of this application. $r_1$ is the random mask.

For the first model parameter, a first model parameter $\tilde{w}_k$ of a floating-point number may be converted into an integer by using $w_k = INT(P\tilde{w}_k)$.

In some embodiments, when summation is performed on the random mask and the first model parameter, a weight may be assigned to the first model parameter, so that each device corresponds to a weight. Subsequently, based on the weight of each device, weighted combination can be performed on model parameters determined by a plurality of devices in the data processing system to obtain the encrypted model parameter.

For example, the first device may perform fusion on the random mask and the rounded first model parameter by using $(r_1 + d_1 w_1) \mod Q$. $d_1$ is a weight of the first device. Q is a very large prime number, and mod is a modulo function. In some embodiments, $2d_1 w_1 < Q$, and $d_1$ herein is an integer. In a case that $d_1$ is a floating-point number, $d_1$ may also be converted into an integer by using the same method.

After obtaining the encrypted model parameter through fusion, the first device may transmit the encrypted model parameter to the second device, and the second device then performs fusion on the second model parameter determined by the second device on this basis. The encryption model parameter is the remainder obtained through the foregoing modulo processing.

710: The second device receives the first model parameter determined by the first device.

711: The second device performs fusion based on the first model parameter and the second model parameter determined by the second device to obtain a first fusion parameter.

After receiving the first model parameter transmitted by the first device, the second device may perform fusion on the first model parameter and the second model parameter determined by the second device.

In the foregoing embodiment in which the first device transmits the encrypted model parameter, after receiving the encrypted model parameter, the second device determines the first fusion parameter, and transmits the first fusion parameter to another second device, the first fusion parameter being obtained by the second device based on the received first model parameter and the second model parameter determined by the second device. In this way, all data subsequently transmitted between devices includes the random mask, thereby effectively ensuring security of data transmission between all devices in the data processing system.

The fusion process is similar to the fusion process in step 709. In some embodiments, the second device performs summation based on the received encrypted model parameter and a second model parameter determined and rounded by the second device, performs a modulo operation on a summation result to obtain the first fusion parameter, and transmits the first fusion parameter to the another second device.

For example, the second device may perform summation on the received $(r_1 + d_1w_1)\bmod Q$ and $d_2w_2$, and then perform modulo processing to obtain $(r_1 + d_1w_1 + d_2w_2)\bmod Q$. $(r_1 + d_1w_1 + d_2w_2)\bmod Q$ is the first fusion parameter. $d_2$ is a weight of the second device, and $w_2$ is the second model parameter determined by the second device.

712: The second device transmits the first fusion parameter to the third device.

713: The third device receives the first fusion parameter transmitted by the second device.

714: The third device performs fusion based on the first fusion parameter and a third model parameter determined by the third device to obtain a third fusion parameter.

Step 713 and step 714 are similar to step 710 and step 711. Details are not described herein again. For example, the third device may perform a similar fusion step to obtain the third fusion parameter $(r_1 + d_1w_1 + d_2w_2 + d_3w_3)\bmod Q$.

715: The third device transmits the third fusion parameter to the fourth device.

716: The fourth device receives the third fusion parameter transmitted by the third device.

717: The fourth device performs fusion based on the third fusion parameter and a fourth model parameter determined by the fourth device to obtain a second fusion parameter.

Step 716 and step 717 are similar to step 710 and step 711. Details are not described herein again. For example, the fourth device may perform a similar fusion step to obtain the second fusion parameter $(r_1 + d_1w_1 + d_2w_2 + d_3w_3 + d_1w_4)\bmod Q$. Currently, the fourth device has performed fusion on model parameters of all devices in the data processing system, and therefore may return the second fusion parameter obtained through fusion to the first device.

718: The fourth device transmits the second fusion parameter to the first device.

719: The first device receives the second fusion parameter.

Step 719 is a process of obtaining the second fusion parameter by the first device. In the foregoing embodiment of performing fusion on a model parameter and a random mask and transmitting a fusion model parameter, a candidate fusion parameter, instead of the second fusion parameter, may be obtained by the fourth device through fusion, the candidate fusion parameter including the random mask, and the first device further needs to remove the random mask to obtain the second fusion parameter. The second fusion parameter includes the model parameters determined by the at least three devices in the data processing system, that is, includes the model parameters determined by the first device, the second device, the third device, and the fourth device. In some embodiments, the second fusion parameter is obtained by performing fusion on the model parameters determined by the first device, the second device, the third device, and the fourth device.

In some embodiments, the first device receives the candidate fusion parameter, the candidate fusion parameter including the random mask and the model parameters determined by the at least three devices in the data processing system, and then the first device removes the random mask from the candidate fusion parameter to obtain the second fusion parameter. For example, the first device may calculate $(r_1 + d_1w_1 + d_2w_2 + d_3w_3 + d_4w_4 - r_1)\bmod Q$, $r_1$ being the random mask.

720: The first device determines a target model parameter of the first service processing model according to the second fusion parameter.

After obtaining the second fusion parameter, the first device may process the second fusion parameter to obtain the target model parameter of the first service processing model. The second fusion parameter is a fusion result. If the target model parameter needs to be obtained, the second fusion parameter further needs to be converted into a model parameter determined by a single device.

In some embodiments, the first device may obtain a quotient of the second fusion parameter and a total weight, and use the quotient as the target model parameter of the first service processing model, the total weight being a sum of weights of the at least three devices in the data processing system.

For example, the first device may calculate $(d_1w_1 + d_2w_2 + d_3w_3 + d_4w_4)/(\text{Pd})$, $d = (d_1 + d_2 + d_3 + d_4)$ being a sum of weights of all devices. In a rounding process, each model parameter is multiplied by P. Therefore, P needs to be removed during averaging, so that a weighted combination result of the model parameters of the four devices can be obtained.

For a weight of each device, a weight of any device may be a quantity of sample data, or may be another parameter, for example, a data quality indicator, a contribution degree indicator, or a reward indicator. This is not limited in this embodiment of this application.

Certainly, in the foregoing descriptions, the target model parameter is obtained by performing weighted averaging on the model parameters. In another embodiment, the model parameters may be alternatively directly averaged, which is actually a special case of weighted averaging. That is, $d_1 = d_2 = d_3 = d_4 = 1$. The first device calculates $(w_1 + w_2 + w_3 + w_4)/4$ and uses it as a model parameter.

In some embodiments, the model parameter and the target model parameter may include N segments, N being an integer greater than 1. In this way, each device is responsible for calculation of one segment of the target model parameter, and then a plurality of devices in the data processing system may calculate segments of the target model parameter in parallel. This can further distribute calculation steps to the plurality of devices, and parallel processing can improve a speed and efficiency of data processing. For segmentation, a participant of horizontal federated learning (a device in the data processing system) may divide a model parameter into N segments, and N participants are elected to respectively calculate weighted averages of the N model segments. The calculation may be performed in parallel. That is, a quantity of segments may be the same as or different from a quantity of devices.

$1 \leq N \leq K$, and K is a quantity of participants of horizontal federated learning. The quantity of segments may be less than the quantity of devices. Some devices in the data processing system perform segment calculation, and some devices do not need to perform segment calculation.

In some embodiments, the quantity N of model parameter segments may be alternatively greater than K, and the quantity of segments may be greater than the quantity of devices. In this way, each device may be responsible for calculation of a plurality of segments, and then separately perform calculation in a plurality of times. Weighted averages of L model parameter segments are calculated each time, and $L \leq K$.

In the manner of parallel segment processing, step 709 may be as follows: The first device transmits a first segment in the first model parameter to the second device connected to the first device. Further, in step 710, the second device receives the first segment in the first model parameter. Then, in step 711 and step 712, the second device obtains a first fusion segment based on the first segment in the first model parameter and the second model parameter determined by the second device, and transmits the first fusion segment to the third device. Steps performed by the third device and the fourth device are similar. After determining a second fusion segment, the fourth device can transmit the second fusion segment to the first device, and further, the first device obtains the second fusion parameter, the second fusion segment including first segments in the model parameters determined by the at least three devices in the data processing system. Finally, in step 720, the first device may determine a target first segment in the target model parameter of the service processing model according to the second fusion segment, and obtain the target model parameter of the service processing model based on the target first segment.

Certainly, during the obtaining the target model parameter, in addition to the target first segment, a target second segment further needs to be determined. The target second segment is determined by a device other than the first device in the data processing system, so that a plurality of devices can determine model segments in parallel.

Therefore, the first device may further receive a second segment or a first fusion second segment in a model parameter transmitted by the second device, perform fusion on the received second segment or first fusion second segment and a second segment in the first model parameter determined by the first device to obtain a second fusion second segment, and transmit the second fusion second segment obtained by the first device to another second device.

In some embodiments, the step of performing fusion on a plurality of segments may be performed by the first device or another device in the data processing system. Therefore, based on the target first segment, the step of obtaining the target model parameter of the service processing model may include the following two manners.

Manner 1: The first device receives the target second segment in the target model parameter, the target second segment being a segment other than the target first segment in the target model parameter, and the first device splices the target first segment and the target second segment in the target model parameter to obtain the target model parameter of the first service processing model. In the manner 1, the first device is responsible for performing fusion on all target segments to obtain the target model parameter.

Manner 2: The first device transmits the target first segment, and the first device receives the target model parameter of the first service processing model, the target model parameter being obtained by the second device by splicing the target first segment and the target second segment, and the target second segment being a segment other than the target first segment in the target model parameter. In the manner 2, a device other than the first device is responsible for performing fusion on all target segments to obtain the target model parameter, and then synchronizes the target model parameter to the first device.

In this manner of parallel segment processing, the foregoing data processing method may include the following steps. For example, as shown in FIG. 9 and FIG. 8, there are K=4 participants. Each participant divides a vector including local model parameters of the participant into four segments. In the segmentation process, the vector may be equally or unequally divided into four segments. This is not limited in this embodiment of this application. For example, a model parameter vector is as follows: $w_k = [w_{k,1}, w_{k,2}, w_{k,3}, w_{k,4}]$, where k = 1, 2, 3, and 4 (k indicates an index of a participant). The four participants are respectively responsible for calculating weighted averages of the four segments (namely, averages of federated model parameters). A participant 1 is responsible for a process of calculating a weighted average of a model parameter segment 1. As shown in FIG. 9, a participant 2 is responsible for a process of calculating a weighted average of a model parameter segment 2, a participant 3 is responsible for calculating a weighted average of a model parameter segment 3, and a participant 4 is responsible for a process of calculating a weighted average process of a model parameter segment 4. Only the weighted averaging process of the participant 1 is described herein, and the weighted averaging processes of the other participants are similar. The process may be divided into the following five steps.

Step ①: An encryption and decryption module of the participant 1 generates a random mask 1, denoted as $r_{1,1} = INT(\tilde{Pr}_{1,1})$, and another participant generates its own random mask. For example, the participant 2 generates a random mask 2: $r_{2,2}$. A model fusion module of the participant 1 calculates a sum of a parameter segment 1 owned by the participant 1 (namely, a first segment in a first model parameter of the participant 1) and the random mask, that is, calculates $(r_{1,1} + d_1 w_{1,1}) \bmod Q$, and transmits the result to the participant 2. $(r_{1,1} + d_1 w_{1,1}) \bmod Q$ is an encrypted segment 1 obtained by the participant 1. $w_{1,1}$ indicates the parameter segment 1 of the participant 1. $d_1$ may be a quantity of training samples owned by the participant 1 or another parameter (for example, a data quality indicator, a contribution degree indicator, or a reward indicator). Q is a very large prime number, for example, $2d_1 w_{1,1} < Q$.

Step ②: The participant 2 performs summation on the encrypted segment 1 received from the participant 1 and a parameter segment 1 of the participant 2, that is, calculates $(r_{1,1} + d_1 w_{1,1} + d_2 w_{2,1}) \bmod Q$, and transmits the result to the participant 3. $(r_{1,1} + d_1 w_{1,1} + d_2 w_{2,1}) \bmod Q$ is an encrypted segment 1 obtained by the participant 2. $d_2$ may be a quantity of training samples owned by the participant 2 or another parameter.

Step ③: The participant 3 performs summation on the encrypted segment 1 received from the participant 2 and a parameter segment 1 of the participant 3, that is, calculates $(r_{1,1} + d_1 w_{1,1} + d_2 w_{2,1} + d_3 w_{3,1}) \bmod Q$, and transmits a result to the participant 4. $(r_{1,1} + d_1 w_{1,1} + d_2 w_{2,1} + d_3 w_{3,1}) \bmod Q$ is an encrypted segment 1 obtained by the participant 3. $d_3$ may be a quantity of training samples owned by the participant 3 or another parameter.

Step ④: The participant 4 performs summation on the encrypted segment 1 received from the participant 3 and a parameter segment 1 of the participant 4, that is, calculates $(r_{1,1} + d_1 w_{1,1} + d_2 w_{2,1} + d_3 w_{3,1} + d_1 w_{4,1}) \bmod Q$, and transmits a result to the participant 1. $(r_{1,1} + d_1 w_{1,1} + d_2 w_{2,1} + d_3 w_{3,1} + d_1 w_{4,1}) \bmod Q$ is an encrypted segment 1 obtained by the participant 4 $d_4$ may be a quantity of training samples owned by the participant 4 or another parameter.

Step ⑤: The participant 1 may obtain a weighted sum of the parameter segments 1, namely, $d_1 w_{1,1} + d_2 w_{2,1} + d_3 w_{3,1} + d_4 w_{4,1}$, by subtracting a random mask 1 generated by the participant 1 from the encrypted segment 1 received from the participant 4, that is, by calculating $(r_{1,1} + d_1 w_{1,1} + d_2 w_{2,1} + d_3 w_{3,1} + d_4 w_{4,1} - r_{1,1}) \bmod Q$. Further, the participant 1 may calculate a weighted average $(d_1 w_{1,1} + d_2 w_{2,1} + d_3 w_{3,1} + d_4 w_{4,1})/(Pd)$ of the model parameter segments 1. The weighted average may be referred to as an average segment 1, and may also be referred to as a parameter segment 1 subsequently, but the parameter segment 1 obtained in this case is a weighted averaging result of the parameter segments 1 of the four devices. $d = (d_1 + d_2 + d_3 + d_4)$ may be a total quantity of training samples or a sum of other parameters of all participants.

In the foregoing steps, all the addition and subtraction operations are operations in an integer domain, and need to include a modulo operation, that is, both the model parameter and the random mask are rounded. The final division operation in step (5) is an operation of dividing an integer by an integer, and a result is a floating-point number. It can be learned from the foregoing descriptions that each participant is responsible for calculating a weighted average of one model parameter segment, and therefore the participants may perform the weighted averaging steps for the model parameter segments in parallel.

In some embodiments, in the grouping scenario shown in FIG. 3, the first device is a leader in a target device group, and the second device is a follower in the target device group. For example, the data processing system in the double-layer ring architecture shown in FIG. 3 includes 10 participants. In a first device group, a participant 3 is a leader, each participant in the first device group is responsible for weighted combination of each of a parameter segment 1 to a parameter segment 3, and the participant 3 is responsible for splicing a parameter segment obtained by each participant in the first group of participants to obtain a model parameter segment 1 to a parameter segment 3, namely, $\sum_{i=1}^{3} d_i w_i$. Similarly, a participant 6 is responsible for combining a parameter segment 4 to a parameter segment 6, namely, $\sum_{i=4}^{6} d_i w_i$, that is obtained by each participant in a second device group through weighted combination; and a participant 10 is responsible for combining a parameter segment 7 to a parameter segment 10, namely, $\sum_{i=7}^{10} d_i w_i$, that is obtained by each participant in a third device group through weighted combination. Further, the participants 3, 6, and 10 may then perform weighted combination on obtained parameter segments to obtain $\frac{1}{d} \sum_{i=1}^{10} d_i w_i$, where $d = \sum_{i=1}^{10} d_i$.

In this embodiment of this application, on the one hand, the devices in the data processing system are connected in a ring architecture, and each device may communicate with a neighboring device. In this way, a device has two communication links to another device, and even if one of the communication links is temporarily interrupted, the device may also communicate with the another device through the other communication link.

Therefore, the data processing system does not interrupt a data processing process due to temporary interruption of a communication link, thereby achieving good stability and robustness. On the other hand, when the data processing system performs data processing, a model parameter determined by each device is sequentially transmitted according to the foregoing communication link. In addition, in a transmission process, each device performs fusion on a received model parameter and a model parameter determined by the device and then transmits a fusion model parameter, so that an amount of data transmitted between devices is small, and model parameters do not need to be transmitted to one device in a centralized manner. This can effectively avoid overload and communication congestion, effectively improve a speed and efficiency of data processing, and ensure stability of data processing.

In some embodiments, the data processing system in the embodiments shown in FIG. 4, FIG. 5, and FIG. 7 may be a blockchain system, and the devices in the data processing system may be node devices in the blockchain system.

The blockchain system is briefly described below.

A blockchain is a new application mode of computer technologies such as distributed data storage, point-to-point transmission, a consensus mechanism, and an encryption algorithm. The blockchain is essentially a decentralized database and is a string of data blocks generated through association by using a cryptographic method. Each data block includes information of a batch of network transactions, the information being used for verifying the validity of information of the data block (anti-counterfeiting) and generating a next data block. The blockchain may include a blockchain underlying platform, a platform product service layer, and an application service layer.

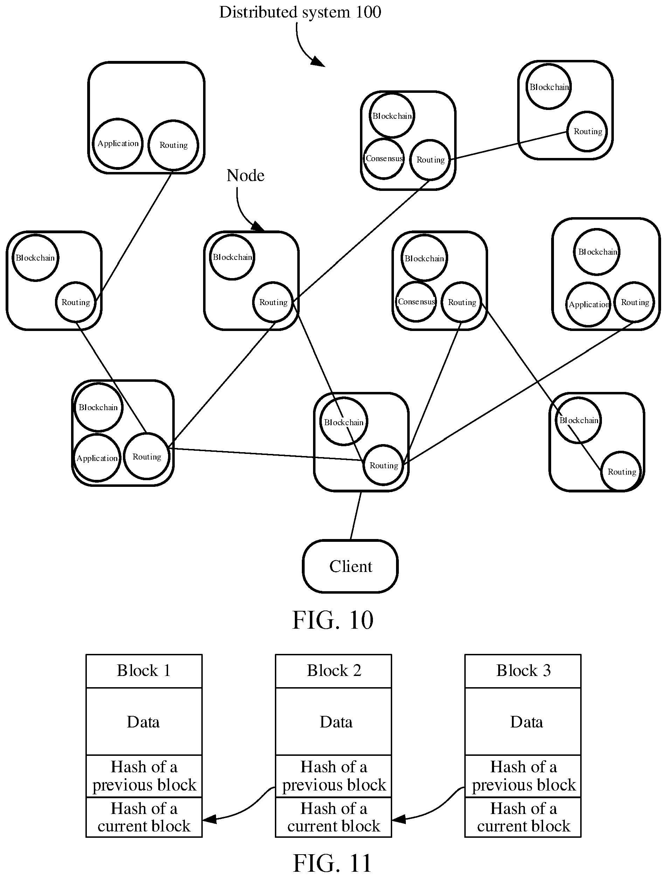

The system involved in the embodiments of this application may be a distributed system formed by connecting a client and a plurality of nodes (computing devices in any forms in an access network, for example, a server and a user terminal) through network communication. The distributed system may be a blockchain system. FIG. 10 is a schematic structural diagram of a distributed system 100 applied to a blockchain system according to an embodiment of this application. The distributed system includes a plurality of nodes (computing devices in any forms in an access network, for example, a server and a user terminal) and a client. A peer-to-peer (P2P) network is formed between the nodes. The P2P protocol is an application layer protocol that runs on the Transmission Control Protocol (TCP). In the distributed system, any machine such as a server or a terminal can join to become a node, and a node includes a hardware layer, an intermediate layer, an operating system layer, and an application layer.

Refer to functions of the nodes in the blockchain system shown in FIG. 10, the involved functions include the following types.

    (1) Routing: a basic function of a node, which is used for supporting communication between nodes.

In addition to the routing function, the node may further have the following functions.

(2) Application: deployed in a blockchain, and used for implementing a specific service according to an actual service requirement, recording data related to function implementation to form record data, adding a digital signature to the record data to indicate a source of task data, and transmitting the record data to another node in the blockchain system, so that the another node adds the record data to a temporary block when successfully verifying a source and integrity of the record data.

(3) Blockchain: including a series of blocks that are connected to each other in a chronological order in which the blocks are generated. Once a new block is added to the blockchain, the block is not to be removed again. Record data submitted by the nodes in the blockchain system is recorded in the blocks.

FIG. 11 is a schematic diagram of a block structure according to an embodiment of this application. Each block includes a hash value of a transaction record stored in the block (a hash value of the block), and a hash value of a previous block. Blocks are connected by using hash values to form a blockchain. In addition, the block may further include information such as a timestamp at which the block is generated. A blockchain is a decentralized database essentially, and is a series of associated data blocks generated by using a cryptographic method. Each data block includes related information, and is configured to verify the validity (anti-counterfeiting) of the information of the data block, and generate a next block.

In this embodiment of this application, the foregoing first device, second device, third device, and fourth device may all be node devices in the blockchain system, and a plurality of node devices are connected in a ring architecture. Each node device may obtain sample data of a target service, and train a service processing model based on the sample data to obtain a model parameter of the service processing model. After obtaining the model parameter, the node device may transmit the model parameter determined by the node device to a connected next node device. The next node device may perform fusion on the received model parameter and a model parameter determined by the next node device, and then transmit a fusion model parameter to a connected next node device, until the last node device performs transmission to the first node device that starts transmission. The node device can determine a final target model parameter based on a fusion model parameter. After determining the final target model parameter, the node device may generate a block based on the target model parameter, and broadcast the block to another node device in the blockchain system. The blockchain system reaches a consensus on the block. When the consensus is reached, each node device can add the block to the blockchain, so that each node device synchronizes the target model parameter.

In a parallel segment processing solution, after each node device obtains a target segment that the node device is responsible for, a node device may splice the target segments to obtain the target model parameter, generate a block, and add the block to the blockchain. Each node device may alternatively generate a block based on a target segment that the node device is responsible for, and add the block to the blockchain.

In some embodiments, after a node device obtains a model parameter determined by the node device, the node device may alternatively generate a block based on the model parameter determined by the node device, and add the block to the blockchain through consensus.

In this way, with a block generated and added to the blockchain, the finally determined target model parameter or intermediate data is added to the blockchain, so that data security, accuracy, and integrity can be ensured by using a characteristic that data in the blockchain in the blockchain system cannot be tampered with. In addition, with the blockchain consensus mechanism, a calculation error of a single node device can be avoided, thereby ensuring data accuracy.

Any combination of the foregoing optional technical solutions may be used to form an optional embodiment of this application. Details are not described herein again.

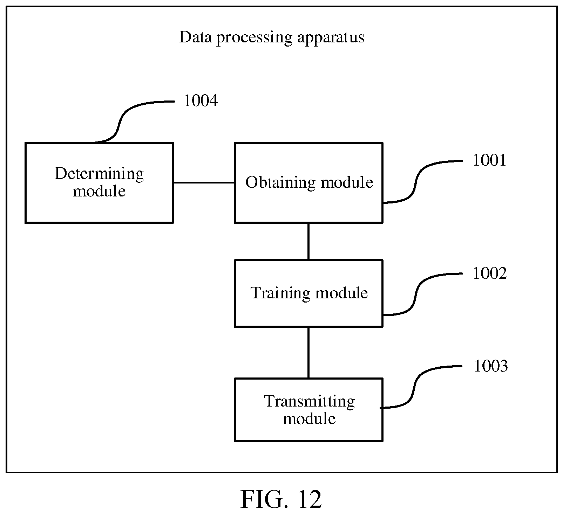

FIG. 12 is a schematic structural diagram of a data processing apparatus according to an embodiment of this application. As shown in FIG. 12, the apparatus includes the following functional modules:

> an obtaining module 1001, configured to obtain first sample data of a target service;
>
> a training module 1002, configured to train a first service processing model based on the first sample data to obtain a first model parameter of the first service processing model;
>
> a transmitting module 1003, configured to transmit the first model parameter to a second device connected to the first device to enable the second device to determine a first fusion parameter and transmit the first fusion parameter to another second device, the first fusion parameter being obtained by the second device based on the received first model parameter and a second model parameter determined by the second device, the second device being a device other than the first device in a data processing system, and devices in the data processing system being connected in a ring architecture; and
>
> the obtaining module 1001 being further configured to obtain a second fusion parameter, the second fusion parameter including model parameters determined by at least three devices in the data processing system; and

> a determining module 1004, configured to determine a target model parameter of the first service processing model according to the second fusion parameter.

In some embodiments, the first model parameter includes N segments, N being an integer greater than 1.

The transmitting module 1003 is configured to transmit a first segment in the first model parameter to the second device connected to the first device, the second device determining a first fusion segment and transmitting the first fusion segment to the another second device, and the first fusion segment being obtained by the second device based on the received first segment and a first segment in the second model parameter determined by the second device.

The obtaining module 1001 is configured to obtain the second fusion parameter based on a second fusion segment, the second fusion segment including first segments in the model parameters determined by the at least three devices in the data processing system.

The determining module 1004 is configured to:

> determine a target first segment in the target model parameter of the first service processing model according to the second fusion segment; and
>
> obtain the target model parameter of the first service processing model based on the target first segment.

In some embodiments, the obtaining module 1001 is configured to perform any one of the following:

> receiving a target second segment in the target model parameter, the target second segment being a segment other than the target first segment in the target model parameter; splicing the target first segment and the target second segment to obtain the target model parameter of the first service processing model;
>
> transmitting the target first segment; and determining the target model parameter of the first service processing model, the target model parameter being obtained by the second device by splicing the target first segment and the target second segment.

In some embodiments, the obtaining module 1001 is further configured to receiving a second segment or a first fusion second segment in a model parameter transmitted by the second device.

The apparatus further includes:
a fusion module, configured to perform fusion on the second segment or the first fusion second segment and a second segment in the model parameter determined by the first device to obtain a second fusion second segment.

The transmitting module 1003 is further configured to transmit the second fusion second segment to the another second device.

In some embodiments, the data processing system includes at least two device groups, each device group includes a leader and a follower, and devices in each device group are connected in a ring architecture. Leaders in the at least two device groups are connected in a ring architecture. The first device is a leader in a target device group. The second device is a follower in the target device group, and the target device group is any one of the at least two device groups.

In some embodiments, the transmitting module 1003 is configured to transmit the first model parameter to the follower in the target device group, the follower determining a first fusion parameter and transmitting the first fusion parameter to another follower, and the first fusion parameter being obtained by the follower based on the received first model parameter and a second model parameter determined by the follower.

The obtaining module 1001 is configured to:

obtain a third fusion parameter, the third fusion parameter including a model parameter determined by the target device group;

transmit the third fusion parameter to a leader in another device group, the leader in the another device group determining a fourth fusion parameter and transmitting the fourth fusion parameter to a follower in the another device group, and the fourth fusion parameter being obtained by the leader in the another device group based on the received third fusion parameter and a fusion parameter determined by a device in the group to which the leader belongs; and

obtain the second fusion parameter, the second fusion parameter including fusion parameters determined by the at least two device groups in the data processing system.

In some embodiments, the transmitting module 1003 is configured to:

obtain a random mask;

perform fusion on the random mask and the first model parameter to obtain an encrypted model parameter; and

transmit the encrypted model parameter to the second device connected to the first device, the second device determining the first fusion parameter and transmitting the first fusion parameter to the another second device, and the first fusion parameter being obtained by the second device based on the received encrypted model parameter and the second model parameter determined by the second device.

The obtaining module 1001 is configured to:

receive a candidate fusion parameter, the candidate fusion parameter including the random mask and the model parameters determined by the at least three devices in the data processing system; and

remove the random mask from the candidate fusion parameter to obtain the second fusion parameter.

In some embodiments, the fusion module is configured to:

round the first model parameter;

perform summation on the random mask and a rounded first model parameter; and

perform a modulo operation on a summation result to obtain the encrypted model parameter.

That the second device determining the first fusion parameter and transmitting the first fusion parameter to the another second device includes:
performing, by the second device, summation based on the received encrypted model parameter and a second model parameter determined and rounded by the second device, performing a modulo operation on a summation result to obtain the first fusion parameter, and transmitting the first fusion parameter to the another second device.

In some embodiments, the fusion module is configured to:

round the first model parameter;

obtain a first product of a rounded first model parameter and a weight of the first device;

perform summation on the random mask and the first product; and

perform a modulo operation on a summation result to obtain the encrypted model parameter.

The second device performs summation based on the received encrypted model parameter and a second product, performs a modulo operation on a summation result to obtain the first fusion parameter, and transmits the first fusion parameter to the another second device, the second product being a product of a second model parameter determined and rounded by the second device and a weight of the second device.

In some embodiments, the transmitting module 1003 is configured to: obtain a candidate random mask;

and round the candidate random mask to obtain the random mask.

In some embodiments, the determining module 1004 is configured to obtain a quotient of the second fusion parameter and a total weight, and use the quotient as the target model parameter of the first service processing model, the total weight being a sum of weights of the at least three devices in the data processing system.

In this embodiment of this application, on the one hand, the devices in the data processing system are connected in a ring architecture, and each device may communicate with a neighboring device. In this way, a device has two communication links to another device, and even if one of the communication links is temporarily interrupted, the device may also communicate with the another device through the other communication link. Therefore, the data processing system does not interrupt a data processing process due to temporary interruption of a communication link, thereby achieving good stability and robustness. On the other hand, when the data processing system performs data processing, a model parameter determined by each device is sequentially transmitted according to the foregoing communication link. In addition, in a transmission process, each device performs fusion on a received model parameter and a model parameter determined by the device and then transmits a fusion model parameter, so that an amount of data transmitted between devices is small, and model parameters do not need to be transmitted to one device in a centralized manner. This can effectively avoid overload and communication congestion, effectively improve a speed and efficiency of data processing, and ensure stability of data processing.

It should be noted that, when the data processing apparatus provided in the foregoing embodiment processes data, only an example of division of the foregoing functional modules is described, and in actual application, the foregoing functions may be implemented by different functional modules as required, that is, the internal structure of the data processing apparatus is divided into different functional modules, to implement all or some of the functions described above. In addition, the apparatus for processing data provided in the foregoing embodiment belongs to the same concept as the embodiment of the method for processing data. For a specific implementation process of the apparatus, refer to the method embodiment, and details are not described herein again.

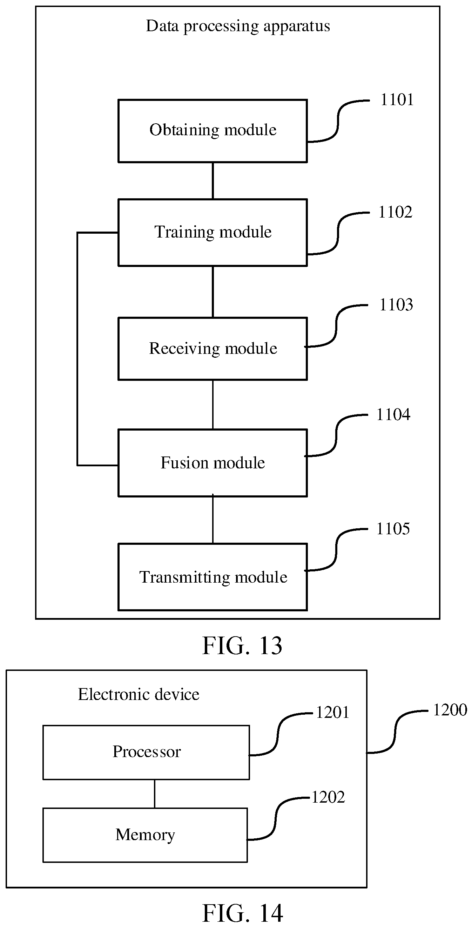

FIG. 13 is a schematic structural diagram of a data processing apparatus according to an embodiment of this application. As shown in FIG. 13, the apparatus includes:

an obtaining module 1101, configured to obtain second sample data of a target service;

a training module 1102, configured to train a second service processing model based on the second sample data to obtain a second model parameter of the second service processing model;

a receiving module 1103, configured to receive a first model parameter determined by a first device, at least three devices including the first device;

a fusion module 1104, configured to perform fusion on the first model parameter and the second model parameter determined by the data processing apparatus to obtain a first fusion parameter; and

a transmitting module 1105, configured to transmit the first fusion parameter to another device in a data processing system, devices in the data processing system being connected in a ring architecture; and

the receiving module 1103 being further configured to determine a target model parameter of the second service processing model.

In some embodiments, the first model parameter includes N segments, N being an integer greater than 1.

The receiving module 1103 is configured to: receive a first segment in the first model parameter determined by the first device.

The receiving module 1103 is further configured to: perform fusion on the first segment determined by the first device and a first segment in the second model parameter determined by the data processing apparatus to obtain a first fusion segment;

transmit the first fusion segment to another device in the data processing system;

obtain a second fusion segment, the second fusion segment including second segments in model parameters determined by the at least three devices in the data processing system;

determine a target second segment in the target model parameter of the second service processing model according to the second fusion segment; and

obtain the target model parameter of the second service processing model based on the target second segment.

In this embodiment of this application, on the one hand, the devices in the data processing system are connected in a ring architecture, and each device may communicate with a neighboring device. In this way, a device has two communication links to another device, and even if one of the communication links is temporarily interrupted, the device may also communicate with the another device through the other communication link.

Therefore, the data processing system does not interrupt a data processing process due to temporary interruption of a communication link, thereby achieving good stability and robustness. On the other hand, when the data processing system performs data processing, a model parameter determined by each device is sequentially transmitted according to the foregoing communication link. In addition, in a transmission process, each device performs fusion on a received model parameter and a model parameter determined by the device and then transmits a fusion model parameter, so that an amount of data transmitted between devices is small, and model parameters do not need to be transmitted to one device in a centralized manner. This can effectively avoid overload and communication congestion, effectively improve a speed and efficiency of data processing, and ensure stability of data processing.

It should be noted that, when the data processing apparatus provided in the foregoing embodiment processes data, only an example of division of the foregoing functional modules is described, and in actual application, the foregoing functions may be implemented by different functional modules as required, that is, the internal structure of the data processing apparatus is divided into different functional modules, to implement all or some of the functions described above. In addition, the apparatus for processing data provided in the foregoing embodiment belongs to the same concept as the embodiment of the method for processing data. For a specific implementation process of the apparatus, refer to the method embodiment, and details are not described herein again.

FIG. 14 is a schematic structural diagram of an electronic device according to an embodiment of this application. The electronic device 1200 may vary a lot due to different configurations or performance, and may include one or more central processing units (CPUs) 1201 and one or more memories 1202. The memory 1202 stores at least one computer program, the at least one computer program being loaded and executed by the processor 1201 to implement the data processing method provided in the foregoing embodiments. The electronic device may further include other components to implement a device function, for example, the electronic device may further include components such as a wired or wireless network interface, and an input/output interface, for inputting and outputting. Details are not described in this embodiment of the present disclosure.

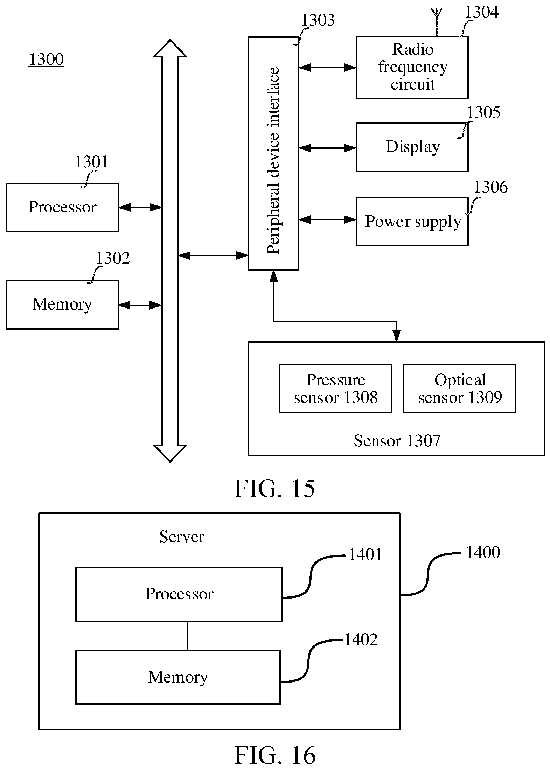

The electronic device in the foregoing method embodiments can be implemented as a terminal. For example, FIG. 15 is a structural block diagram of a terminal according to an embodiment of this application. The terminal 1300 may be a portable mobile terminal, for example, a smartphone, a tablet computer, a notebook computer, or a desktop computer. The terminal 1300 may also be referred to as another name such as user equipment, a portable terminal, a laptop terminal, or a desktop terminal.

Generally, the terminal 1300 includes: a processor 1301 and a memory 1302.

The processor 1301 may include one or more processing cores, and may be, for example, a 4-core processor or an 8-core processor. The processor 1301 may be implemented by at least one hardware form in a digital signal processing (DSP), a field-programmable gate array (FPGA), and a programmable logic array (PLA). In some embodiments, the processor 1301 may further include an artificial intelligence (AI) processor. The AI processor is configured to process a computing operation related to machine learning.

The memory 1302 may include one or more computer-readable storage media that may be non-transitory. The memory 1302 may also include a high-speed random access memory, as well as non-volatile memory, such as one or more disk storage devices and flash storage devices. In some embodiments, the non-transitory computer-readable storage medium in the memory 1302 is configured to store at least one instruction, and the at least one instruction being configured to be executed by the processor 1301 to implement the data processing method provided in the method embodiments of this application.

In some embodiments, the terminal 1300 may optionally include a peripheral interface 1303 and at least one peripheral device. The processor 1301, the memory 1302, and the peripheral interface 1303 may be connected through a bus or a signal cable. Each peripheral device may be connected to the peripheral device interface 1303 by using a bus, a signal line, or a circuit board. In some embodiments, the peripheral device includes at least one of a radio frequency circuit 1304, a display screen 1305, and a power supply 1306.

The peripheral interface 1303 may be configured to connect at least one input/output (I/O)-related peripheral to the processor 1301 and the memory 1302.

The radio frequency circuit 1304 is configured to receive and transmit a radio frequency (RF) signal that is also referred to as an electromagnetic signal. The RF circuit 1304 communicates with a communication network and other communication devices through the electromagnetic signal. The RF circuit 1304 converts an electric signal into an electromagnetic signal for transmission, or converts a received electromagnetic signal into an electric signal. The RF circuit 1304 may communicate with other terminals by using at least one wireless communication protocol. The wireless communication protocol includes but is not limited to a world wide web, a metropolitan area network, an intranet, generations of mobile communication networks (2G, 3G, 4G, and 5G), a wireless local area network, and/or a wireless fidelity (Wi-Fi) network. In some embodiments, the radio frequency circuit 1304 may also include a circuit related to near field communication (NFC), which is not limited in this application.

The display screen 1305 is configured to display a user interface (UI). The UI may include graphics, text, icons, videos, and any combination thereof. When the display screen 1305 is a touch display screen, the display screen 1305 is further capable of collecting touch signals on or above a surface of the display screen 1305. The touch signal may be inputted, as a control signal, to the processor 1301 for processing.

The power supply 1306 is configured to supply power to components in the terminal 1300. The power supply 1306 may be an alternating-current power supply, a direct-current power supply, a disposable battery, or a rechargeable battery. When the power supply 1306 includes the rechargeable battery, the rechargeable battery may be a wired charging battery or a wireless charging battery. The wired charging battery is a battery charged through a wired line, and the wireless charging battery is a battery charged through a wireless coil. The rechargeable battery may further be configured to support a quick charge technology.

In some embodiments, the terminal 1300 further includes one or more sensors 1307. The one or more sensors 1307 include but are not limited to a pressure sensor 1308 and an optical sensor 1309.

The pressure sensor 1308 may be disposed at a side frame of the terminal 1300 and/or a lower layer of the display screen 1305. When the pressure sensor 1308 is arranged on the side frame of the terminal 1300, a grip signal of the user to the terminal 1300 may be detected, and the processor 1301 performs left and right hand recognition or a quick operation according to the grip signal collected by the pressure sensor 1308. When the pressure sensor 1308 is arranged on the lower layer of the display screen 1305, the processor 1301 controls an operable control on the UI interface according to a pressure operation of the user on the display screen 1305. The operable control includes at least one of a button control, a scroll-bar control, an icon control, and a menu control.

The optical sensor 1309 is configured to collect ambient light intensity. In an embodiment, the processor 1301 may control display luminance of the display screen 1305 according to the ambient light intensity collected by the optical sensor 1309. In some embodiments, in a case that the ambient light intensity is relatively high, the display luminance of the display screen 1305 is increased; and in a case that the ambient light intensity is relatively low, the display luminance of the touch display screen 1305 is reduced.

A person skilled in the art may understand that the structure shown in FIG. 15 constitutes no limitation on the terminal 1300, and the terminal may include more or fewer components than those shown in the figure, or some components may be combined, or a different component deployment may be used.

The electronic device in the foregoing method embodiments can be implemented as a server. For example, FIG. 16 is a schematic structural diagram of a server according to an embodiment of this application. The server 1400 may vary greatly due to different configurations or performance, and may include one or more processors (central processing units (CPUs)) 1401 and one or more memories 1402. The memory 1402 stores at least one computer program, the at least one computer program being loaded and executed by the processor 1401 to implement the data processing method provided in the foregoing method embodiments. Certainly, the server may also have a wired or wireless network interface, an input/output interface and other components to facilitate input/output. The server may also include other components for implementing device functions. Details are not described herein.

In an exemplary embodiment, a computer-readable storage medium, for example, a memory including at least one piece of computer program is further provided. The at least one piece of the computer program may be executed by a processor in a terminal to implement the data processing method in the foregoing embodiments. For example, the computer-readable storage medium may be a ROM, a RAM, a CD-ROM, a magnetic tape, a floppy disk, and an optical data storage device.

In an exemplary embodiment, a computer program product or a computer program is further provided, including one or more pieces of program code, the one or more pieces of program code being stored in a computer-readable storage medium. One or more processors of an electronic device can read the one or more pieces of program code from the computer-readable storage medium, and the one or more processors execute the one or more pieces of program code to enable the electronic device to perform the foregoing data processing method.

A person of ordinary skill in the art may understand that all or some of the steps of the foregoing embodiments may be implemented by hardware, or may be implemented a program instructing related hardware. The program may be stored in a computer-readable storage medium. The storage medium may be: a ROM, a magnetic disk, or an optical disc.

The foregoing descriptions are merely optional embodiments of this application, but are not intended to limit this application. Any modification, equivalent replacement, or improvement made within the spirit and principle of this application shall fall within the protection scope of this application.

## Claims

1. A data processing method, performed by a first device in a data processing system, the data processing system comprising at least three devices connected in a ring architecture, and the method comprising:

   obtaining first sample data of a target service;
   training a first service processing model based on the first sample data to obtain a first model parameter of the first service processing model;

transmitting the first model parameter to a second device connected to the first device to enable the second device to determine a first fusion parameter and transmit the first fusion parameter to another second device, the first fusion parameter being obtained by the second device based on the received first model parameter and a second model parameter determined by the second device, and the second device being a device other than the first device in the data processing system;

obtaining a second fusion parameter, the second fusion parameter comprising model parameters determined by the at least three devices in the data processing system; and

determining a target model parameter of the first service processing model according to the second fusion parameter.

2. The method according to claim 1, wherein the first model parameter comprises N segments, N being an integer greater than 1;

the transmitting the first model parameter to a second device connected to the first device comprises:

transmitting a first segment in the first model parameter to the second device connected to the first device, the second device determining a first fusion segment and transmitting the first fusion segment to the another second device, and the first fusion segment being obtained by the second device based on the received first segment and a first segment in the second model parameter determined by the second device;

the obtaining a second fusion parameter comprises:

obtaining the second fusion parameter based on a second fusion segment, the second fusion segment comprising first segments in the model parameters determined by the at least three devices in the data processing system; and

the determining a target model parameter of the first service processing model according to the second fusion parameter comprises:

determining a target first segment in the target model parameter of the first service processing model according to the second fusion segment; and

obtaining the target model parameter of the first service processing model based on the target first segment.

3. The method according to claim 2, wherein the obtaining the target model parameter of the first service processing model based on the target first segment comprises any one of the following:

receiving a target second segment in the target model parameter, the target second segment being a segment other than the target first segment in the target model parameter; splicing the target first segment and the target second segment to obtain the target model parameter of the first service processing model;

transmitting the target first segment; and determining the target model parameter of the first service processing model, the target model parameter being obtained by the second device by splicing the target first segment and the target second segment.

4. The method according to claim 2, wherein the method further comprises:

receiving a second segment or a first fusion second segment in a model parameter transmitted by the second device; and

performing fusion on the second segment or the first fusion second segment and a second segment in the model parameter determined by the first device to obtain a second fusion second segment; and

transmitting the second fusion second segment to the another second device.

5. The method according to claim 1, wherein the data processing system comprises at least two device groups, each device group comprises a leader and a follower, and devices in each device group are connected in a ring architecture; leaders in the at least two device groups are connected in a ring architecture; the first device is a leader in a target device group; and the second device is a follower in the target device group, and the target device group is any one of the at least two device groups.

6. The method according to claim 5, wherein the transmitting the first model parameter to a second device connected to the first device comprises:

transmitting the first model parameter to the follower in the target device group, the follower determining a first fusion parameter and transmitting the first fusion parameter to another follower, and the first fusion parameter being obtained by the follower based on the received first model parameter and a second model parameter determined by the follower; and

the obtaining a second fusion parameter comprises:

obtaining a third fusion parameter, the third fusion parameter comprising a model parameter determined by the target device group;

transmitting the third fusion parameter to a leader in another device group, the leader in the another device group determining a fourth fusion parameter and transmitting the fourth fusion parameter to a follower in the another device group, and the fourth fusion parameter being obtained by the leader in the another device group based on the received third fusion parameter and a fusion parameter determined by a device in the group to which the leader belongs; and

obtaining the second fusion parameter, the second fusion parameter comprising fusion parameters determined by the at least two device groups in the data processing system.

7. The method according to claim 1, wherein the transmitting the first model parameter to a second device connected to the first device comprises:

obtaining a random mask;

performing fusion on the random mask and the first model parameter to obtain an encrypted model parameter; and

transmitting the encrypted model parameter to the second device connected to the first device, the second device determining the first fusion parameter and transmitting the first fusion parameter to the another second device, and the first fusion parameter being obtained by the second device based on the received encrypted model parameter and the second model parameter determined by the second device; and

the obtaining a second fusion parameter comprises:

receiving a candidate fusion parameter, the candidate fusion parameter comprising the random mask and the model parameters determined by the at least three devices in the data processing system; and

removing the random mask from the candidate fusion parameter to obtain the second fusion parameter.

8. The method according to claim 7, wherein the performing fusion on the random mask and the first model parameter to obtain an encrypted model parameter comprises:

rounding the first model parameter;

performing summation on the random mask and a rounded first model parameter; and

performing a modulo operation on a summation result to obtain the encrypted model parameter; and

that the second device determining the first fusion parameter and transmitting the first fusion parameter to the another second device comprises:

performing, by the second device, summation based on the received encrypted model parameter and a second model parameter determined and rounded by the second device, performing a modulo operation on a summation result to obtain the first fusion parameter, and transmitting the first fusion parameter to the another second device.

9. The method according to claim 7, wherein the performing fusion on the random mask and the first model parameter to obtain an encrypted model parameter comprises:

rounding the first model parameter;

obtaining a first product of a rounded first model parameter and a weight of the first device;

performing summation on the random mask and the first product; and

performing a modulo operation on a summation result to obtain the encrypted model parameter; and

that the second device determining the first fusion parameter and transmitting the first fusion parameter to the another second device comprises:

performing, by the second device, summation based on the received encrypted model parameter and a second product, performing a modulo operation on a summation result to obtain the first fusion parameter, and transmitting the first fusion parameter to the another second device, the second product being a product of a second model parameter determined and rounded by the second device and a weight of the second device.

10. The method according to claim 1, wherein the obtaining a random mask comprises:

obtaining a candidate random mask; and

rounding the candidate random mask to obtain the random mask.

11. The method according to claim 1, wherein the determining a target model parameter of the first service processing model according to the second fusion parameter comprises:

obtaining a quotient of the second fusion parameter and a total weight, and using the quotient as the target model parameter of the first service processing model, the total weight being a sum of weights of the at least three devices in the data processing system.

**12.** A data processing method, performed by a second device in a data processing system, the data processing system comprising at least three devices, the devices in the data processing system being connected in a ring architecture, and the method comprising:

> obtaining second sample data of a target service;
> training a second service processing model based on the second sample data to obtain a second model parameter of the second service processing model;
> receiving a first model parameter determined by a first device, the at least three devices comprising the first device;
> performing fusion on the first model parameter and the second model parameter determined by the second device to obtain a first fusion parameter;
> transmitting the first fusion parameter to another device in the data processing system; and
> determining a target model parameter of the second service processing model.

**13.** The method according to claim 12, wherein the second model parameter comprises N segments, N being an integer greater than 1;
the receiving a first model parameter determined by a first device comprises:

> receiving a first segment in the first model parameter determined by the first device; and
> the determining a target model parameter of the second service processing model comprises:

>> performing fusion on the first segment determined by the first device and a first segment in the second model parameter determined by the second device to obtain a first fusion segment;
>> transmitting the first fusion segment to another device in the data processing system;
>> obtaining a second fusion segment, the second fusion segment comprising second segments in model parameters determined by the at least three devices in the data processing system;
>> determining a target second segment in the target model parameter of the second service processing model according to the second fusion segment; and
>> obtaining the target model parameter of the second service processing model based on the target second segment.

**14.** A data processing system, the data processing system comprising at least three devices, the at least three devices comprising a first device and at least two second devices, and the at least three devices in the data processing system being connected in a ring architecture;

> the first device being configured to: obtain first sample data of a target service; train a first service processing model based on the first sample data to obtain a first model parameter of the first service processing model; transmit the first model parameter to a second device connected to the first device to enable the second device to determine a first fusion parameter and transmit the first fusion parameter to another second device, the first fusion parameter being obtained by the second device based on the received first model parameter and a second model parameter determined by the second device, and the second device being a device other than the first device in the data processing system; obtain a second fusion parameter, the second fusion parameter comprising model parameters determined by the at least three devices in the data processing system; and determine a target model parameter of the first service processing model according to the second fusion parameter; and
> any second device being configured to: obtain second sample data of the target service; train a second service processing model based on the second sample data to obtain a second model parameter of the second service processing model; receive a first model parameter determined by a first device; perform fusion on the first model parameter and the second model parameter determined by the second device to obtain a first fusion parameter; transmit the first fusion parameter to another device in the data processing system; and determine a target model parameter of the second service processing model.

**15.** A data processing apparatus, the apparatus comprising:

> an obtaining module, configured to obtain first sample data of a target service;
> a training module, configured to train a first service processing model based on the first sample data to obtain a first model parameter of the first service processing model;
> a transmitting module, configured to transmit the first model parameter to a second device connected to the first device to enable the second device to determine a first fusion parameter and transmit the first fusion parameter to another second device, the first fusion parameter being obtained by the second device based on the received first model parameter and a second model parameter determined by the second device, the second device being a device other than the first device in a data processing system, and devices in the data processing system being connected in a ring architecture;

the obtaining module being further configured to obtain a second fusion parameter, the second fusion parameter comprising model parameters determined by at least three devices in the data processing system; and

a determining module, configured to determine a target model parameter of the first service processing model according to the second fusion parameter.

16. An electronic device, comprising one or more processors and one or more memories storing at least one piece of computer program, the at least one piece of computer program being loaded and executed by the one or more processors to implement the data processing method according to any one of claims 1 to 11, or the data processing method according to any one of claims 12 to 13.

17. A computer-readable storage medium, storing at least one computer program, the at least one computer program being loaded and executed by a processor to implement the data processing method according to any one of claims 1 to 11 or claims 12 to 13.

|  | F1 | F2 | F3 | | F4 | F5 |
|---|---|---|---|---|---|---|
| U1 | | | | | | |
| U2 | | | | | | |
| U3 | | | | ... | | |
| U4 | | | | | | |
| U5 | | | | | | |
| U6 | | | | | | |
| U7 | | | | ... | | |
| U8 | | | | | | |
| U9 | | | | | | |
| U10 | | | | | | |
| U11 | | | | | | |
| U12 | | | | | | |
| U13 | | | | ... | | |
| U14 | | | | | | |
| U15 | | | | | | |

Participant 1

Participant 2

Participant 3

FIG. 1

Data processing system 200

201

Model training module

Local data | User-defined model | Model checkpoint

PyTorch, TensorFlow, or Horovod model training or the like

Participant management module | Process scheduling module | Encryption and decryption module

Model fusion module

Message management and communication module

Participant 1

201

Message management and communication module

Participant management module | Process scheduling module | Model fusion module

Encryption and decryption module

Model training module

PyTorch, TensorFlow, or Horovod model training or the like

Local data | User-defined model | Model checkpoint

Participant 2

201

Message management and communication module

Participant management module | Process scheduling module | Model fusion module

Encryption and decryption module

Model training module

PyTorch, TensorFlow, or Horovod model training or the like

Local data | User-defined model | Model checkpoint

Participant 3

201

Message management and communication module

Participant management module | Process scheduling module | Model fusion module

Encryption and decryption module

Model training module

PyTorch, TensorFlow, or Horovod model training or the like

Local data | User-defined model | Model checkpoint

Participant K

FIG. 2

FIG. 3

A first device obtains first sample data of a target service — 401

The first device trains a first service processing model based on the first sample data to obtain a first model parameter of the first service processing model — 402

The first device transmits the first model parameter to a second device connected to the first device, and the second device determines a first fusion parameter and transmits the first fusion parameter to another second device, the first fusion parameter being obtained by the second device based on the received first model parameter and a second model parameter determined by the second device, and the second device being a device other than the first device in a data processing system — 403

The first device obtains a second fusion parameter, the second fusion parameter including model parameters determined by at least three devices in the data processing system — 404

The first device determines a target model parameter of the first service processing model according to the second fusion parameter — 405

FIG. 4

A second device obtains second sample data of a target service — 501

The second device trains a second service processing model based on the second sample data to obtain a second model parameter of the second service processing model — 502

The second device receives a first model parameter determined by a first device — 503

The second device performs fusion on the first model parameter and the second model parameter determined by the second device to obtain a first fusion parameter — 504

The second device transmits the first fusion parameter to another device in a data processing system — 505

The second device determines a target model parameter of the second service processing model — 506

FIG. 5

FIG. 6

| First device | Second device | Third device | Fourth device |
|---|---|---|---|
| 701: The first device obtains first sample data of a target service | 703: The second device obtains second sample data of the target service | 705: The third device obtains third sample data of the target service | 707: The fourth device obtains fourth sample data of the target service |
| 702: The first device trains a first service processing model based on the first sample data to obtain a first model parameter of the first service processing model | 704: The second device trains a second service processing model based on the second sample data to obtain a second model parameter of the second service processing model | 706: The third device trains a third service processing model based on the third sample data to obtain a third model parameter of the third service processing model | 708: The fourth device trains a fourth service processing model based on the fourth sample data to obtain a fourth model parameter of the fourth service processing model |

709: Transmit the first model parameter

710: The second device receives the first model parameter determined by the first device

711: The second device performs fusion based on the first model parameter and the second model parameter determined by the second device to obtain a first fusion parameter

712: Transmit the first fusion model parameter

713: The third device receives the first fusion model parameter transmitted by the second device

714: The third device performs fusion based on the first fusion parameter and a third model parameter determined by the third device to obtain a third fusion parameter

715: Transmit the third fusion model parameter

716: The fourth device receives the third fusion parameter transmitted by the third device

717: The fourth device performs fusion based on the third fusion parameter and a fourth model parameter determined by the fourth device to obtain a second fusion parameter

718: Transmit the second fusion parameter

719: The first device receives the second fusion parameter

720: The first device determines a target model parameter of the first service processing model according to the second fusion parameter

FIG. 7

FIG. 8

| | Participant 1 Responsible for averaging | Participant 2 Responsible for averaging | Participant 3 Responsible for averaging | Participant 4 Responsible for averaging |
|---|---|---|---|---|
| Participant 1 | Parameter segment 1 | Parameter segment 2 | Parameter segment 3 | Parameter segment 4 |
| Participant 2 | Parameter segment 1 | Parameter segment 2 | Parameter segment 3 | Parameter segment 4 |
| Participant 3 | Parameter segment 1 | Parameter segment 2 | Parameter segment 3 | Parameter segment 4 |
| Participant 4 | Parameter segment 1 | Parameter segment 2 | Parameter segment 3 | Parameter segment 4 |

FIG. 9

Distributed system 100

Node

FIG. 10

| Block 1 | | Block 2 | | Block 3 |
|---|---|---|---|---|
| Data | | Data | | Data |
| Hash of a previous block | | Hash of a previous block | | Hash of a previous block |
| Hash of a current block | | Hash of a current block | | Hash of a current block |

FIG. 11

Data processing apparatus

1004

Determining
module

Obtaining module 1001

Training module 1002

Transmitting
module 1003

FIG. 12

Data processing apparatus

Obtaining module — 1101

Training module — 1102

Receiving module — 1103

Fusion module — 1104

Transmitting module — 1105

FIG. 13

Electronic device — 1200

Processor — 1201

Memory — 1202

FIG. 14

1300

1301

Processor

1302

Memory

1303

Peripheral device interface

1304

Radio frequency circuit

1305

Display

1306

Power supply

Pressure sensor 1308

Optical sensor 1309

Sensor 1307

FIG. 15

Server

1401

1400

Processor

1402

Memory

FIG. 16

## INTERNATIONAL SEARCH REPORT

| | International application No. |
|---|---|
| | **PCT/CN2021/125214** |

**A. CLASSIFICATION OF SUBJECT MATTER**

H04L 12/42(2006.01)i; H04L 12/801(2013.01)i; G06N 20/00(2019.01)i; G06N 3/08(2006.01)i; G06K 9/62(2006.01)i

According to International Patent Classification (IPC) or to both national classification and IPC

**B. FIELDS SEARCHED**

Minimum documentation searched (classification system followed by classification symbols)

H04L; G06N

Documentation searched other than minimum documentation to the extent that such documents are included in the fields searched

Electronic data base consulted during the international search (name of data base and, where practicable, search terms used)

DWPI; CNABS; CNTXT; WOTXT; USTXT; EPTXT; JPTXT; VEN; CNKI; IEEE; 3GPP: 联邦学习, 模型, 融合, 聚合, 聚类, 训练, 中断, 拥塞, 环, 首尾相连, 参数, 分段, 人工智能, Federated Learning, model, learn+, train+, syncretic, interrupt, congestion, ring, parameter?, end to end, subsection, Artificial Intelligence, AI

**C. DOCUMENTS CONSIDERED TO BE RELEVANT**

| Category* | Citation of document, with indication, where appropriate, of the relevant passages | Relevant to claim No. |
|---|---|---|
| PX | CN 112217706 A (TENCENT TECHNOLOGY SHENZHEN CO., LTD.) 12 January 2021 (2021-01-12) <br> claims 1-15, entire description | 1-17 |
| A | CN 110263921 A (SHENZHEN QIANHAI WEBANK CO., LTD.) 20 September 2019 (2019-09-20) <br> entire document | 1-17 |
| A | CN 110472745 A (SHENZHEN QIANHAI WEBANK CO., LTD.) 19 November 2019 (2019-11-19) <br> entire document | 1-17 |
| A | CN 111695629 A (TENCENT TECHNOLOGY SHENZHEN CO., LTD. et al.) 22 September 2020 (2020-09-22) <br> entire document | 1-17 |
| A | CN 110490738 A (SHENZHEN QIANHAI WEBANK CO., LTD.) 22 November 2019 (2019-11-22) <br> entire document | 1-17 |

☑ Further documents are listed in the continuation of Box C. ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **23 December 2021** | **29 December 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/125214**

### C.    DOCUMENTS CONSIDERED TO BE RELEVANT

| Category* | Citation of document, with indication, where appropriate, of the relevant passages | Relevant to claim No. |
|---|---|---|
| A | CN 106789083 A (CHENGDU UNIVERSITY OF INFORMATION TECHNOLOGY) 31 May 2017 (2017-05-31) <br> entire document | 1-17 |
| A | CN 109871702 A (SHENZHEN QIANHAI WEBANK CO., LTD.) 11 June 2019 (2019-06-11) <br> entire document | 1-17 |
| A | US 10666342 B1 (QUALCOMM INCORPORATED) 26 May 2020 (2020-05-26) <br> entire document | 1-17 |
| A | US 2009219818 A1 (TSUCHIYA MASAHIKO) 03 September 2009 (2009-09-03) <br> entire document | 1-17 |

Form PCT/ISA/210 (second sheet) (January 2015)

**INTERNATIONAL SEARCH REPORT**
Information on patent family members

International application No.

**PCT/CN2021/125214**

| Patent document cited in search report | | | Publication date (day/month/year) | Patent family member(s) | | | Publication date (day/month/year) |
|---|---|---|---|---|---|---|---|
| CN | 112217706 | A | 12 January 2021 | CN | 112217706 | B | 19 March 2021 |
| CN | 110263921 | A | 20 September 2019 | CN | 110263921 | B | 04 June 2021 |
| CN | 110472745 | A | 19 November 2019 | CN | 110472745 | B | 27 April 2021 |
| CN | 111695629 | A | 22 September 2020 | None | | | |
| CN | 110490738 | A | 22 November 2019 | WO | 2021022707 | A1 | 11 February 2021 |
| CN | 106789083 | A | 31 May 2017 | CN | 106789083 | B | 17 December 2019 |
| CN | 109871702 | A | 11 June 2019 | None | | | |
| US | 10666342 | B1 | 26 May 2020 | WO | 2020222998 | A1 | 05 November 2020 |
|  |  |  |  | US | 2020358514 | A1 | 12 November 2020 |
| US | 2009219818 | A1 | 03 September 2009 | JP | 2009212634 | A | 17 September 2009 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011385627